# EUROPEAN PATENT APPLICATION

(11) **EP 4 703 410 A1**
(43) Date of publication of application: **04.03.2026**
(21) Application number: 24797191.4
(22) Date of filing: 26.04.2024
(51) Int. Cl.: C08H 7/00, C08L 97/00

(54) **STRUCTURED PRODUCT OF WHITE LIGNIN AND/OR WHITE LIGNIN-POLYSACCHARIDE COPOLYMER**

(30) Priority: 28.04.2023 JP 2023075241
(71) Applicant: Kyoto University, Kyoto-shi, Kyoto 606-8501 (JP)
(72) Inventor: NISHIMURA, Hiroshi, Kyoto-shi, Kyoto 606-8501 (JP); MIZUKOSHI, Yoshiteru, Kyoto-shi, Kyoto 606-8501 (JP); MAKIMURA, Yutaka, Kyoto-shi, Kyoto 606-8501 (JP)
(74) Representative: Vossius & Partner Patentanwälte Rechtsanwälte mbB
(86) International application number: PCT/JP2024/016482
(87) International publication number: WO 2024/225448

(57) **Abstract**

An object is to provide a novel structured material of white lignin or a white lignin-polysaccharide copolymer. This object is achieved by a structured material of white lignin and/or a white lignin-polysaccharide copolymer, the white lignin having a content of a structure containing β-O-4 ether bonds of 50% or more, the white lignin-polysaccharide copolymer containing at least one bond selected from the group consisting of an α-ether bond between lignin and polysaccharide, an α-ester bond between lignin and polysaccharide, and a γ-ester bond between lignin and polysaccharide, and the structured material being a complex of the white lignin and/or the white lignin-polysaccharide copolymer with an organic acid and/or a salt, and/or the structured material being a material in which a hydroxy group of the white lignin and/or the white lignin-polysaccharide copolymer is modified.

## Description

### Technical Field

The present invention relates to a structured material of lignin and/or a lignin-polysaccharide copolymer.

### Background Art

Lignin, together with polysaccharides (cellulose and hemicelluloses), is a major component constituting the cell walls of plants. Lignin has attracted attention as a naturally occurring, abundant aromatic polymer. At present, lignin is mainly obtained as a by-product in the manufacturing process of paper pulp or the manufacturing process of bioethanol. Due to their denatured form, it is difficult to increase the functionality of these isolated lignins. Thus, studies suggest various methods for isolating lignin while avoiding denaturation as much as possible (PTL 1).

Lignin is generally colored brown or black. For this reason, lignin cannot be used in a field where coloring or the mixing of brown or black colors is avoided. In order to solve such a problem, PTL 2 discloses a technique in which lignin is purified and then decolorized. However, this technique is complicated in terms of process and causes conversion of the chemical structure of lignin.

### Citation List

### Patent Literature

PTL 1: JP2013-241391A
PTL 2: JP2021-017582A

### Summary of Invention

### Technical Problem

In the course of research, the present inventors came up with the idea of extracting lignin in the reverse order of wood biosynthesis, as a novel method for isolating lignin, and found that lignin in a state close to that of natural lignin can be obtained by the method. As a result of further research based on this finding, the inventors found that white lignin or white lignin-polysaccharide copolymer with a structure closer to that of natural lignin can be obtained.

To expand the potential for application and development of white lignin or white lignin-polysaccharide copolymers, it is important to develop a novel structured material of white lignin or a white lignin-polysaccharide copolymer.

Thus, an object of the present invention is to provide a novel structured material of white lignin or a white lignin-polysaccharide copolymer.

### Solution to Problem

The present inventors conducted extensive research to achieve the object and found that the object can be achieved by a structured material of white lignin and/or a white lignin-polysaccharide copolymer, the white lignin having a content of a structure containing β-O-4 ether bonds of 50% or more, the white lignin-polysaccharide copolymer containing at least one bond selected from the group consisting of an α-ether bond between lignin and polysaccharide, an α-ester bond between lignin and polysaccharide, and a γ-ester bond between lignin and polysaccharide, and the structured material being a complex of the white lignin and/or the white lignin-polysaccharide copolymer with an organic acid and/or a salt, and/or the structured material being a material in which a hydroxy group of the white lignin and/or the white lignin-polysaccharide copolymer is modified and/or a material in which a hydroxy group of the white lignin and/or the white lignin-polysaccharide copolymer is substituted. The inventors conducted further research based on this finding, thus accomplishing the present invention. Specifically, the present invention includes the following embodiments.

Item 1. A structured material of white lignin and/or a white lignin-polysaccharide complex,
the white lignin having a content of a structure containing β-O-4 ether bonds of 50% or more,
the white lignin-polysaccharide complex containing at least one bond selected from the group consisting of an α-ether bond between lignin and polysaccharide, an α-ester bond between lignin and polysaccharide, and a γ-ester bond between lignin and polysaccharide, and
the structured material being a complex of the white lignin and/or the white lignin-polysaccharide complex with an organic acid and/or a salt, and/or
the structured material being a material in which a hydroxy group of the white lignin and/or the white lignin-polysaccharide complex is modified or substituted.

Item 2. The structured material according to Item 1, wherein
the structured material is a complex of the white lignin and/or a white lignin-polysaccharide copolymer, and/or a modified form and/or substituted form thereof, with an organic acid and/or a salt, and
the structured material has a unique spectral structure in at least one wavenumber range selected from the group consisting of 1080 to 950 cm⁻¹, 1480 to 1350 cm⁻¹, and 3000 to 2900 cm⁻¹ in a first derivative spectrum of an infrared absorption spectrum, wherein the term "unique" means that the spectral structure is not solely attributable to any of the white lignin and/or the white lignin-polysaccharide copolymer, or the organic acid and/or the salt.

Item 3. The structured material according to Item 2, wherein the structured material has three or more unique spectral structures in wavenumber ranges consisting of 1080 to 950 cm⁻¹, 1480 to 1350 cm⁻¹, and 3000 to 2900 cm⁻¹ in the first derivative spectrum of the infrared absorption spectrum.

Item 4. The structured material according to Item 2, which is in the form of a powder, a sol, or a gel.

Item 5. The structured material according to Item 2, wherein the structured material is a complex of the white lignin and/or the white lignin-polysaccharide copolymer with a compound having a carboxy structure and/or a carbonyl structure and/or an amine structure, and/or a salt containing a metal ion.

Item 6. The structured material according to Item 4, which is in the form of a gel.

Item 7. The structured material according to Item 1, wherein the structured material is a material in which a hydroxy group of the white lignin and/or the white lignin-polysaccharide copolymer is modified and/or a material in which a hydroxy group of the white lignin and/or the white lignin-polysaccharide copolymer is substituted, and the structured material contains at least one structure selected from the group consisting of a carbonylated structure, a halogenated structure, an aminated structure, a boron-modified structure, an acylated structure, and a crosslinked structure.

Item 8. The structured material according to Item 1, wherein the white lignin has a Hunter's whiteness (W) of 60 or more, and/or the white lignin-polysaccharide complex has a Hunter's whiteness (W) of 60 or more.

Item 9. A method for producing the structured material of any one of Items 2 to 6 and 8, comprising:
mixing the white lignin and/or the white lignin-polysaccharide copolymer with an organic acid and/or a salt, and a solvent to obtain a solution or a dispersion; and
reducing the solvent from the solution or the dispersion.

Item 10. A method for producing the structured material of Item 7 or 8, comprising subjecting a hydroxy group of the white lignin and/or the white lignin-polysaccharide copolymer to a modification or substitution reaction.

Item 11. An adsorbent, recovery agent, removal agent, or transport agent for a metal ion or a salt containing the same, comprising white lignin and/or a white lignin-polysaccharide complex,
the white lignin having a content of a structure containing β-O-4 ether bonds of 50% or more, and
the white lignin-polysaccharide complex containing at least one bond selected from the group consisting of an α-ether bond between lignin and polysaccharide, an α-ester bond between lignin and polysaccharide, and a γ-ester bond between lignin and polysaccharide.

Item 12. The adsorbent, recovery agent, removal agent, or transport agent according to Item 11, which is used to adsorb, recover, remove, or transport a metal ion or a salt containing the same by forming a complex with the metal ion or the salt containing the same.

### Advantageous Effects of Invention

The present invention provides a novel structured material of white lignin or a white lignin-polysaccharide copolymer.

### Brief Description of Drawings

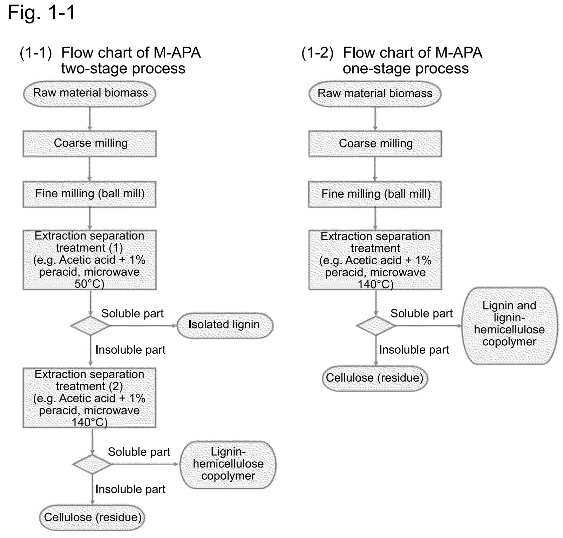

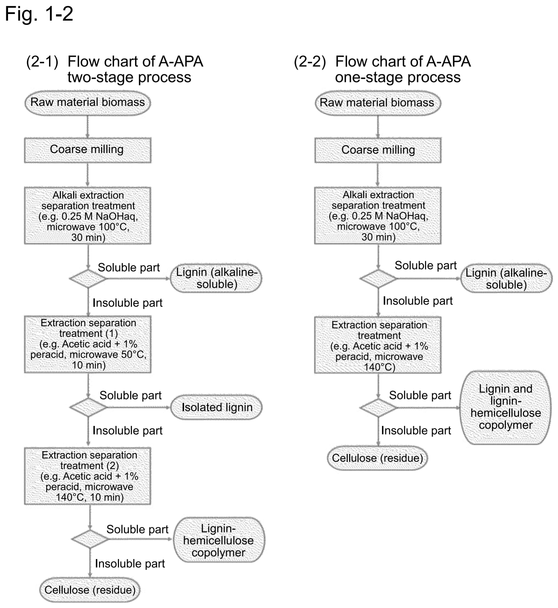

Fig. 1-1 shows flow charts of an M-APA method.
Fig. 1-2 shows flow charts of an A-APA method.
Fig. 2 shows microwave irradiation conditions, power, temperature, and pressure profile for isolating lignocellulose components, with the following device specifications: Initiator+ 60 microwave synthesizer, available from Biotage; stirring speed: 600 rpm; cooling: ON; absorption: High.
Fig. 3 shows a two-dimensional NMR spectrum of a low-modified, high-purity lignin with a high ether-type content. This is an analysis result of lignin isolated according to the M-APA method (microwave treatment at 50°C for 10 minutes with acetic acid-peracetic acid 1%) using eucalyptus as a starting material.
Fig. 4 shows the partial chemical structures of lignin interunit bonds and covalent bonds between lignin and hemicelluloses.
Fig. 5 shows two-dimensional NMR spectra a to d of lignin-hemicellulose copolymers, and enlarged views a' to d' of interunit bonds and saccharide regions. Lignin-hemicellulose copolymers obtained from hardwood (a and b) and softwood (c and d) according to the M-APA method were analyzed. The circles in the figure indicate LC bonds (ether type and ester type).

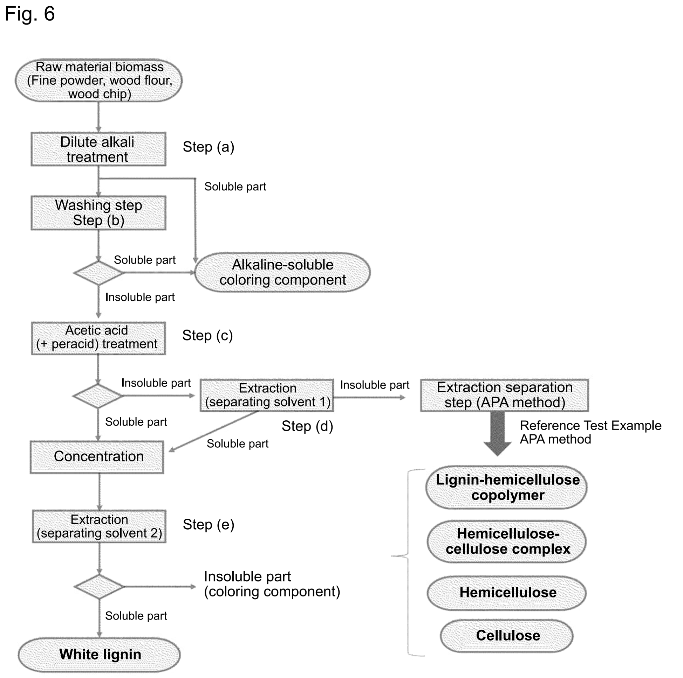

Fig. 6 shows an example scheme of the production of white lignin.

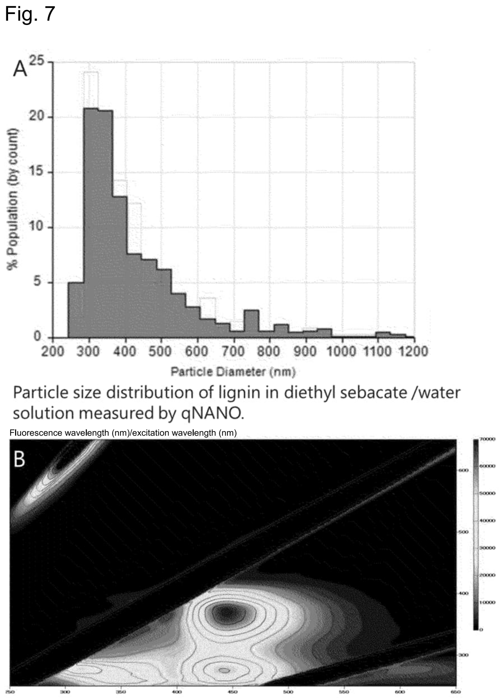

Fig. 7 shows [A] a particle size distribution of lignin fine particles derived from eucalyptus in a diethyl sebacate/water solution (4:3) measured by qNANO, and [B] a 3D fluorescence spectrum. The average particle system was 436 nm ± 16 nm and the mode particle size was 304 nm [A] as measured by qNANO, and the average particle system was 462 nm ± 27 nm and the mode particle size was 459 nm ± 23 nm as measured by dynamic light scattering (DLS, available from Horiba, Ltd.). Self-assembly resulted in distinct long wavelength fluorescence (Ex: 380 nm, Em: around 440 nm) [B]. Lignin fine particles that can be well dispersed in water by use of diethyl sebacate, which is common as a low-toxic cosmetic base material, were obtained. Pickering emulsion was also found.

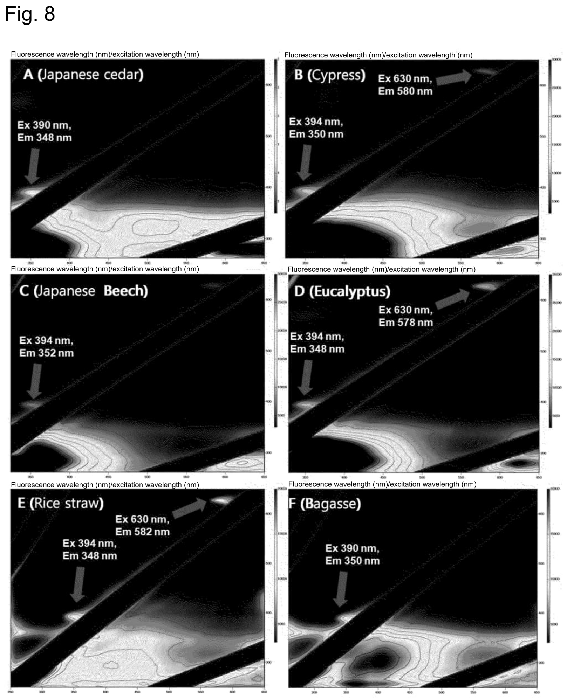

Fig. 8 shows 3D fluorescence spectra A to D of white lignin nanoparticles. There are long wavelength fluorescence (400 nm to 550 nm) and characteristic anti-Stokes fluorescence (Ex 394 nm, Em 352 nm), (Ex 630 nm, Em 578 nm). The raw materials are as follow: A is softwood Japanese cedar-derived white lignin; B is softwood cypress-derived white lignin; C is hardwood Japanese beech-derived white lignin; D is hardwood eucalyptus-derived white lignin; E is herbaceous rice straw-derived white lignin; and F is herbaceous sugarcane bagasse-derived white lignin.
Fig. 9 shows an absorption spectrum of a white lignin-sodium acetate complex of Test Example 5-1, obtained by a diffuse reflection method (normalized based on the weight of lignin).
Fig. 10 shows photos of the appearance of a gel-like complex obtained using zinc chloride in Test Example 5.
Fig. 11 shows a Raman spectrum of a white lignin-sodium acetate complex produced in Test Example 5.
Fig. 12 shows first derivative infrared absorption spectra of a white lignin-citric acid complex produced in Test Example 5. The characteristic absorption of the representative complex is indicated by arrows.
Fig. 13 shows first derivative infrared absorption spectra of a white lignin-glycine complex produced in Test Example 5. The characteristic absorption of the representative complex is indicated by arrows.
Fig. 14 shows first derivative infrared absorption spectra of a white lignin-tartaric acid complex produced in Test Example 5. The characteristic absorption of the representative complex is indicated by arrows.
Fig. 15 shows first derivative infrared absorption spectra of a white lignin-zinc chloride complex produced in Test Example 5. The characteristic absorption of the representative complex is indicated by arrows.
Fig. 16 shows first derivative infrared absorption spectra of a white lignin-sodium acetate produced in Test Example 5. The unique spectral structures of the complex is indicated by arrows. 1/4 and 1/9 represent the weight ratios of lignin to sodium acetate.
Fig. 17 shows 2D HSQC NMR data of oxidized lignin A obtained in Test Example 6.
Fig. 18 shows ¹³C-NMR data of oxidized lignin B obtained in Test Example 6.
Fig. 19 shows ¹³C-NMR data of oxidized lignin C obtained in Test Example 6.
Fig. 20 shows ¹¹⁹F-NMR data of halogenated lignin F1 obtained in Test Example 6.
Fig. 21 shows derivative spectra obtained in Test Example 1-5. The raw material is shown in the upper right of each spectrum.
Fig. 22 shows derivative spectra obtained in Test Example 1-5. The raw material is shown in the upper right of each spectrum.
Fig. 23 shows derivative spectra obtained in Test Example 1-5. The raw material is shown in the upper right of each spectrum.
Fig. 24 shows derivative spectra obtained in Test Example 1-5. The raw material is shown in the upper right of each spectrum.
Fig. 25 shows derivative spectra obtained in Test Example 1-5. The raw material is shown in the upper right of each spectrum.
Fig. 26 shows first derivative infrared absorption spectra of a bamboo-derived white lignin-citric acid complex produced in Test Example 6. The characteristic absorption of the representative complex is indicated by arrows.
Fig. 27 shows first derivative infrared absorption spectra of a bamboo-derived white lignin-glycine complex produced in Test Example 6. The characteristic absorption of the representative complex is indicated by arrows.
Fig. 28 shows first derivative infrared absorption spectra of a bamboo-derived white lignin-tartaric acid complex produced in Test Example 6. The characteristic absorption of the representative complex is indicated by arrows.
Fig. 29 shows first derivative infrared absorption spectra of a wet bamboo-derived white lignin-zinc chloride complex produced in Test Example 6. The characteristic absorption of the representative complex is indicated by arrows.
Fig. 30 shows first derivative infrared absorption spectra of dry bamboo-derived white lignin-zinc chloride complex (wet) produced in Test Example 6. The characteristic absorption of the representative complex is indicated by arrows.
Fig. 31 shows first derivative infrared absorption spectra of a swollen product obtained by adding water to the dry bamboo-derived white lignin-zinc chloride complex produced in Test Example 6. The characteristic absorption of the representative complex is indicated by arrows.
Fig. 32 shows first derivative infrared absorption spectra of a bamboo-derived white lignin-sodium acetate complex produced in Test Example 6. The characteristic absorption of the representative complex is indicated by arrows.
Fig. 33 shows first derivative infrared absorption spectra of a cypress-derived white lignin-citric acid complex produced in Test Example 6. The characteristic absorption of the representative complex is indicated by arrows.
Fig. 34 shows first derivative infrared absorption spectra of a cypress-derived white lignin-glycine complex produced in Test Example 6. The characteristic absorption of the representative complex is indicated by arrows.
Fig. 35 shows first derivative infrared absorption spectra of a cypress-derived white lignin-tartaric acid complex produced in Test Example 6. The characteristic absorption of the representative complex is indicated by arrows.
Fig. 36 shows first derivative infrared absorption spectra of a cypress-derived white lignin-zinc chloride complex produced in Test Example 6. The characteristic absorption of the representative complex is indicated by arrows.
Fig. 37 shows first derivative infrared absorption spectra of a cypress-derived white lignin-sodium acetate complex produced in Test Example 6. The characteristic absorption of the representative complex is indicated by arrows.

### Description of Embodiments

In the present specification, the terms "comprise," "contain," and "include" include the concepts of comprising, containing, including, consisting essentially of, and consisting of.

### 1. Method for Producing White Lignin or White Lignin-polysaccharide Copolymer

In one embodiment, the present invention relates to a method for producing white lignin or a white lignin-polysaccharide copolymer, including the following steps: (a) bringing plant biomass into contact with an alkaline solution to obtain an alkali-treated material; (b) washing the alkali-treated material with a liquid to obtain a washed material; and (c) bringing a solution containing an organic acid into contact with the washed material (in the present specification, this method may be referred to as "the production method of the present invention"). The details are described below.

The plant biomass is not particularly limited as long as it contains lignin and/or a lignin-polysaccharide copolymer, and examples thereof include a plant body itself and a mechanically processed product of a plant body. The plant biomass usually contains at least one selected from the group consisting of hemicellulose and cellulose in addition to lignin and/or a lignin-polysaccharide copolymer, and preferably contains lignin, hemicellulose, a lignin-polysaccharide copolymer, a cellulose-hemicellulose complex, and cellulose.

Examples of the plant body include softwood materials, hardwood materials, and non-wood materials. Specific examples include softwood materials of, for example, Japanese cedar, pine, *Picea jezoensis, Larix kaempferi, Pinus thunbergii, Abies sachalinensis, Pinus parviflora, Taxus cuspidata, Thuja standishii, Picea polita, Picea alcokiana, Podocarpus macrophyllus, Abies firma, Chamaecyparis pisifera, Pseudotsuga japonica, Thujopsis dolabrata* var. *dolabrata, Thujopsis dolabrata* var. *hondae, Tsuga sieboldii, Tsuga diversifolia,* cypress, *Taxus cuspidata, Cephalotaxus harringtonia, Picea jezoensis* var. *hondoensis,* yellow cedar (*Callitropsis nootkatensis*), Lawson cypress (*Chamaecyparis lawsoniana*), Douglas fir (*Pseudotsuga menziesii*), Sitka spruce (*Picea sitchensis*), *Pinus radiata,* eastern spruce, eastern white pine, western larch, western fir, western hemlock, and tamarack; hardwood materials of, for example, *Populus Tremuloides,* American black cherry, *Liriodendron tulipifera,* walnut, kaba-zakura, *Zelkova serrata,* sycamore, silver cherry, *Fraxinus mandshurica, Tectona grandis,* Chinese elm, Chinese maple, *Quercus,* Japanese beech, hard maple, hickory, *Carya illinoinensis, Fraxinus americana,* white oak, white birch, red oak, acacia, and eucalyptus; and non-wood materials of, for example, *Oryza sativa,* sugarcane, barley, wheat, maize, pineapple, oil palm, *Hibiscus cannabinus,* cotton, alfalfa, *Phleum pratense,* bamboo, *Sasa,* bamboo, and sugar beet.

Examples of the mechanically processed product of a plant body include logs, rectangular lumbers, boards, solid wood, wood materials, engineered wood, laminated veneer lumbers, plywood, wooden board, particle board, fiber board, wood chips, particulate wood materials (e.g., chips, particles, and wood flour), fibrous wood materials, compressed materials, and crushed materials.

In one embodiment of the present invention, the plant biomass may be wood flour. The volume average particle size of the wood flour is, for example, 500 µm or less, 200 µm or less, or 100 µm or less. The lower limit of the average particle size may be any value and can be, for example, 1 µm, 2 µm, or 5 µm. Wood flour can be obtained by pulverizing plant biomass. Pulverization can be performed following or in accordance with known methods, for example, by using various types of mills (e.g., ball mills and mixer mills).

Plant biomasses can be used singly or in a combination of two or more.

In step (a), the plant biomass and the alkaline solution are brought into contact with each other to obtain an alkali-treated material. Step (a) can improve the yield by causing loosening of the plant cell wall structure (reducing intermolecular interactions and cleaving hydrogen bonds) and by cleaving intramolecular ester bonds. In addition, a coloring component of lignin can be efficiently removed by a combination of step (a) and step (b) described later.

The alkaline solution may be any alkaline solution as long as the above object can be achieved. For example, the alkaline solution can be a solution with a pH of 12 to 15. The pH of the solution is preferably 13 to 14. The alkaline solution can also be, for example, a solution containing 0.2 to 2 mass% (preferably 0.7 to 1.5 mass%) of an alkali metal hydroxide (sodium hydroxide, potassium hydroxide, etc.). The concentration of the alkali metal hydroxide is preferably 0.1 to 0.3 M.

The amount of the alkaline solution for use may be any amount as long as the above object can be achieved. The alkaline solution can be used in an amount of, for example, 3 to 20 mL, and preferably 5 to 12 mL, per 1 g of the plant biomass.

The contact mode between the plant biomass and the alkaline solution may be any mode. From the viewpoint of, for example, treatment efficiency, it is preferable to immerse the plant biomass in the alkaline solution.

The temperature of the alkaline solution may be any temperature as long as the above object can be achieved. The temperature of the alkaline solution is preferably a relatively low temperature, and is, for example, 70°C or lower, preferably 60°C or lower, more preferably 50°C or lower, even more preferably 10 to 50°C, still even more preferably 20 to 50°C, and particularly preferably 30 to 50°C.

From the viewpoint of being able to further improve the whiteness of the resulting lignin and/or lignin-polysaccharide copolymer, it is preferable to irradiate the plant biomass with ultrasonic waves or microwaves in step (a). The conditions for the microwave treatment may be set as appropriate, and for example, a commercially available microwave synthesizer can be used while stirring the solution. In addition, the conditions for the ultrasonic treatment may be appropriately set, and for example, the ultrasonic treatment can be performed using a commercially available ultrasonic irradiation device. The output conditions for the microwaves and the ultrasonic waves can be set so that the temperature of the alkaline solution can be maintained at the temperature described above.

The treatment time in step (a) is not particularly limited as long as the above object can be achieved. The treatment time is, for example, 5 to 100 minutes, preferably 15 to 70 minutes, and more preferably 20 to 40 minutes.

In order to effectively promote the penetration of the alkaline solution into the plant cell structure and the dispersion and movement of an extracted component, ultrasonic irradiation, pressure change (pressurization, pressure reduction, and repetition thereof), microwave irradiation, or generation of nanobubbles is used, thereby efficiently and in a short period of time achieving alkaline swelling (an effect of swelling cell walls by loosening packing of polymer chains in the plant cell walls, partial cleavage of hydrogen bonds, and partial cleavage of ester bonds) and an effect of extracting a coloring component.

A decrease in the solid-liquid interfacial tension of the alkaline solution and an improvement in wettability are also effective. Those can be attained by the addition of a hydrophilic organic solvent (e.g., ethanol) or a surfactant.

After the contact treatment of the plant biomass and the alkaline solution, a solid-liquid separation treatment (centrifugation, filtration, standing, etc.) is performed as necessary to obtain an insoluble part (alkali-treated material). The alkali-treated material is subjected to step (b).

In step (b), the alkali-treated material is washed with a liquid to obtain a washed material. By the combination of step (a) and step (b) described above, a coloring component of lignin can be efficiently removed.

The liquid used for washing is not particularly limited as long as it contains a solvent capable of removing the coloring component of lignin. From the viewpoint of coloring component removal efficiency, the liquid preferably contains water. The content of the water in the liquid is preferably 20 mass% or more, more preferably 40 mass% or more, even more preferably 60 mass% or more, still even more preferably 80 mass% or more, and particularly preferably 90 mass% or more, and the liquid is particularly preferably water.

The method for washing with a liquid is not particularly limited. For example, the alkali-treated material can be washed by mixing it with the liquid, and then subjecting the mixture to solid-liquid separation to collect an insoluble part. The washing operation is preferably repeated a plurality of times. From the viewpoint of further increasing the whiteness of the resulting lignin and/or lignin-polysaccharide copolymer, it is preferable to perform washing until the washing waste liquid reaches a neutral range (e.g., pH 6.5 to 8.0, preferably pH 6.5 to 7.5).

The insoluble part (washed material) obtained after completion of the washing operation is subjected to step (c).

In step (c), a solution containing an organic acid is brought into contact with the washed material.

The organic acid solution is not particularly limited as long as it contains an organic acid and is capable of extracting and solubilizing lignin and/or a lignin-polysaccharide copolymer.

Examples of organic acids include, but are not limited to, acetic acid, formic acid, glyoxylic acid, maleic acid, propionic acid, folic acid, isobutyric acid, valeric acid, isovaleric acid, pyruvic acid, oxalic acid, malonic acid, succinic acid, glutaric acid, ketoglutaric acid, adipic acid, lactic acid, tartaric acid, fumaric acid, oxaloacetic acid, malic acid, isocitric acid, citric acid, benzoic acid, phthalic acid, isophthalic acid, terephthalic acid, hemimellitic acid, trimellitic acid, trimesic acid, mellophanic acid, prehnitic acid, pyromellitic acid, mellitic acid, methanesulfonic acid, benzenesulfonic acid, p-toluenesulfonic acid, camphorsulfonic acid, p-toluenesulfinic acid, and benzenesulfinic acid. Among these, preferred are acetic acid, formic acid, glyoxylic acid, 3-oxopropanoic acid, 2-methyl-3-oxopropanoic acid, and the like, more preferred are acetic acid, formic acid, glyoxylic acid, and the like, and particularly preferred is acetic acid.

The organic acids can be used singly or in a combination of two or more.

From the viewpoint of the yield of the white lignin and/or the white lignin-polysaccharide copolymer, the organic acid solution preferably contains a peracid.

The peracid may be any acid that contains a hydroperoxide group (-O-OH). Examples of peracids include organic peroxo acids such as percarboxylic acid, and persulfuric acid, percarbonic acid, perphosphoric acid, and peroxo-perhalogenic acid. Examples of percarboxylic acids include peracetic acid, performic acid, perbenzoic acid, and metachloroperbenzoic acid. Examples of peroxo-perhalogenic acid include peroxo-perchloric acid, peroxo-perbromic acid, and peroxo-periodic acid. In addition to the above, examples of peracids include hydrogen peroxide, lithium peroxide, sodium peroxide, potassium peroxide, sodium percarbonate, urea peroxide, sodium perborate, tert-butyl hydroperoxide, cumene hydroperoxide, di-tert-butyl peroxide, dimethyldioxirane, acetone peroxide, methyl ethyl ketone peroxide, and hexamethylene triperoxide diamine. Among these, preferred are organic peroxo acids, hydrogen peroxide, sodium percarbonate, urea peroxide, sodium perborate, and the like, more preferred are percarboxylic acids (in particular, peracetic acid), hydrogen peroxide, and the like, and particularly preferred is hydrogen peroxide.

The peracids can be used singly or in a combination of two or more.

The content of the organic acid in the organic acid solution is, for example, 5 to 30 mol/L, preferably 8 to 25 mol/L, and more preferably 10 to 20 mol/L. The content of the organic acid in the organic acid solution is preferably 3 to 10 g, more preferably 4 to 8 g, and even more preferably 5 to 7 g, per 1 g of the washed material to be brought into contact with the organic acid solution. The content of the organic acid in the organic acid solution is preferably 50 to 100 mass%.

When the organic acid solution contains a peracid, the content of the peracid in the organic acid solution is, for example, 0.05 to 3 mol/L, preferably 0.08 to 2.5 mol/L, and more preferably 0.1 to 2 mol/L. The content of the peracid in the organic acid solution is preferably 0.03 to 0.10 g, more preferably 0.04 to 0.08 g, and even more preferably 0.05 to 0.07 g, per 1 g of the washed material to be brought into contact with the organic acid solution. When the organic acid solution contains a peracid, the content of the peracid in the organic acid solution is preferably 0.1 to 10%, more preferably 0.3 to 5%, and even more preferably 0.6 to 2%.

The contact mode between the washed material and the organic acid solution is not particularly limited. From the viewpoint of, for example, treatment efficiency, it is preferable to immerse the washed material in the organic acid solution. From the viewpoint of the whiteness of the resulting lignin and/or lignin-polysaccharide copolymer, it is preferable to perform step (c) in an inert gas atmosphere or an atmosphere of a gas other than oxygen (i.e., the gas that comes in contact with the organic acid solution is an inert gas or a gas other than oxygen). Examples of such a gas include nitrogen, rare gas, and hydrogen.

By setting the temperature of the organic acid solution to 100°C or lower, high-quality (low-condensation) lignin with a high content of the structure containing β-O-4 ether bonds among all of the bonding modes between monolignols can be obtained. In this case, the temperature of the organic acid solution is preferably 90°C or lower, more preferably 70°C or lower, and even more preferably 60°C or lower. The lower limit of the temperature is, for example, 15°C, preferably 30°C, and more preferably 40°C.

By setting the temperature of the organic acid solution to higher than 100°C, a high-quality lignin-polysaccharide copolymer can be obtained. In this case, the temperature of the organic acid solution is preferably 160°C or lower, and more preferably 150°C or lower. The lower limit of the temperature is, for example, 105°C, preferably 110°C, and more preferably 115°C.

In one embodiment of the present invention, step (c) is performed using an organic acid solution at 100°C or lower, and white lignin is obtained from the resulting soluble part; on the other hand, the resulting insoluble part is subjected to step (c) using an organic acid solution having a temperature of higher than 100°C, and a white lignin-polysaccharide copolymer can be obtained from the resulting soluble part.

The treatment time in step (c) is not particularly limited as long as the above object can be achieved. The treatment time is, for example, 1 to 60 minutes, preferably 1 to 30 minutes, and more preferably 5 to 20 minutes. In addition, in the case of obtaining a lignin-polysaccharide copolymer, by setting the treatment time to be relatively short, for example, 15 minutes or less, preferably 10 minutes or less, and more preferably 5 minutes or less, the whiteness of the target product can be further increased.

In step (c), it is preferable that microwave treatment is performed while the biomass is immersed in the solution. This improves the yield of the lignin and/or the lignin-polysaccharide copolymer. The conditions for microwave treatment can be set as appropriate. For example, a commercially available microwave synthesizer can be used while stirring the solution. The microwave treatment time can be, for example, 1 to 30 minutes, and preferably about 10 minutes. The isolation method of the present invention can also easily be constructed as a continuous system as well as a batch system, since the microwave treatment, when performed, requires only a relatively short irradiation time.

In step (c), it is preferable to irradiate the plant biomass with microwaves or ultrasonic waves from the viewpoint of being able to promote penetration of the solution into the internal pits inside the plant cell wall and being able to improve the yield. The irradiation conditions are the same as those described above.

In order to effectively promote the penetration of the organic acid solution into the plant cell structure and the dispersion and movement of an extracted component, ultrasonic irradiation, pressure change (pressurization, pressure reduction, and repetition thereof), microwave irradiation, generation of nanobubbles, or generation of cavitation is used, thereby efficiently and in a short period of time achieving an effect of extracting a coloring component.

A decrease in the solid-liquid interfacial tension of the organic acid solution and an improvement in wettability are also effective. Those can be attained by the addition of a hydrophilic organic solvent (e.g., ethanol) or a surfactant.

After step (c), a separating solvent is added as necessary, and then the soluble part and the insoluble part are separated. The method of separating the soluble part from the insoluble part may be any method. Examples of usable methods include decantation, spin-down, and filtration. When no separating solvent is added, and when a solvent having a relatively low water content or containing no water (a solvent having a water content of, for example, 0 to 50 mass%, preferably 0 to 30 mass%, more preferably 0 to 20 mass%, even more preferably 0 to 10 mass%, and particularly preferably 0 to 5 mass%) is added as the separating solvent, the soluble part contains white lignin or a white lignin-polysaccharide copolymer. On the other hand, when a solvent having a relatively high water content (a solvent having a water content of, for example, more than 50 mass% and 100 mass% or less, preferably 70 to 100 mass%, more preferably 80 to 100 mass%, even more preferably 90 to 100 mass%, and particularly preferably 95 to 100 mass%) is added as the separating solvent, the insoluble part contains white lignin or a white lignin-polysaccharide copolymer.

The separating solvent may be dioxane, ethanol, acetone, acetonitrile, DMSO, DMF, NMI, ethyl acetate, methanol, butanol, various other alcohols, acetic acid, water, and mixed solvents thereof. By using these, lignin and lignin-hemicellulose copolymers are separated. From the viewpoint of extraction efficiency, selectivity, and environmental load, a mixed solvent of an organic solvent typified by ethanol, dioxane, acetone, acetonitrile, or the like with water is preferable.

In one embodiment, the production method of the present invention preferably includes step (d) of, after step (c), adding a first solvent to obtain a solution containing white lignin and/or a white lignin-polysaccharide copolymer.

The first solvent is not particularly limited, and examples thereof include the separating solvent described above. Particularly preferred as the first solvent are at least one solvent selected from the group consisting of ethanol, methanol, acetone, acetonitrile, propanol, and water (particularly preferably ethanol) and a mixed solvent.

After adding the first solvent and, as necessary, mixing, the soluble part and the insoluble part are separated. The method of separating the soluble part from the insoluble part is not particularly limited. For example, a method such as decantation, spin-down, or filtration can be used, and a solution containing white lignin and/or a white lignin-polysaccharide copolymer is thereby obtained.

When the production method of the present invention includes step (d), it is preferable from the viewpoint of further increasing the whiteness of the resulting lignin and/or lignin-polysaccharide copolymer that the method includes step (e) of adding a second solvent to a concentrate of the solution containing white lignin and/or a white lignin-polysaccharide copolymer to extract the white lignin and/or the white lignin-polysaccharide copolymer.

The concentrate of the solution containing the white lignin and/or the white lignin-polysaccharide copolymer is not particularly limited as long as it is obtained by distilling off a part or the entirety of the solvent of the solution containing the white lignin and/or the white lignin-polysaccharide copolymer. The concentrate is preferably a dried product.

The second solvent is not particularly limited, and examples thereof include the separating solvent described above. In particular, a mixed solvent of water with at least one organic solvent selected from the group consisting of dioxane, acetone, acetonitrile, allyl alcohol, propanol, 1-butanol, 2-methyl-1-propanol, 2-butanol, ethyl acetate, and pyridine (particularly preferably dioxane) is preferable as the second solvent. The content of the organic solvent in the mixed solvent is, for example, 60 to 95 mass%, preferably 70 to 90 mass%, and more preferably 75 to 85 mass%.

The white lignin and/or the white lignin-polysaccharide copolymer is extracted by adding the second solvent and, as necessary, mixing. Thereafter, the obtained extract (soluble part) and the insoluble part are separated. The method of separating the soluble part from the insoluble part may be any method. Examples of usable methods include decantation, spin-down, and filtration.

After step (c), by concentrating and drying the soluble part obtained as described above, solid white lignin and/or a solid white lignin-polysaccharide copolymer can be obtained.

The production method of the present invention enables white lignin and/or a white lignin-polysaccharide copolymer to be obtained by suppressing decomposition and molecular weight reduction of lignin while suppressing reactions that cause color development in the extraction and separation process (oxidation reaction, over-decomposition, condensation, Maillard reaction, and coloring reaction of lignin).

Regarding the method for producing white lignin and/or a white lignin-polysaccharide copolymer, the present invention includes the following embodiments.

Item A1. A method for producing white lignin or a white lignin-polysaccharide copolymer, comprising the following steps:
(a) bringing plant biomass into contact with an alkaline solution to obtain an alkali-treated material;
(b) washing the alkali-treated material with a liquid to obtain a washed material; and
(c) bringing a solution containing an organic acid into contact with the washed material.

Item A2. The method according to Item A1, wherein the organic acid solution contains a peracid.

Item A3. The method according to Item A1 or A2, wherein the alkaline solution has a temperature of 70°C or lower.

Item A4. The method according to any one of Items A1 to A3, wherein step (a) comprising irradiating the plant biomass with ultrasonic waves or microwaves.

Item A5. The method according to any one of Items A1 to A4, wherein the liquid contains water.

Item A6. The method according to any one of Items A1 to A4, wherein the organic acid solution has a temperature of 60°C or lower.

Item A7. The method according to any one of Items A1 to A6, wherein step (c) comprises irradiating the washed material with ultrasonic waves or microwaves.

Item A8. The method according to any one of Items A1 to A7, which comprises step (d) of, after step (c), adding a first solvent to obtain a solution containing white lignin or a white lignin-polysaccharide copolymer.

Item A9. The method according to Item A8, which comprises step (e) of adding a second solvent to a concentrate of the solution containing white lignin and/or a white lignin-polysaccharide copolymer to extract the white lignin.

Item A10. The method according to any one of Items A1 to A9, wherein the white lignin and/or the white lignin-polysaccharide copolymer has a Hunter's whiteness (W) of 60 or more.

Item A11. The method according to any one of Items A1 to A10, wherein the organic acid solution has a temperature of 100°C or lower, and the method comprising a step of obtaining a white lignin-containing solution.

Item A12. The method according to any one of Items A1 to A10, wherein the organic acid solution has a temperature of higher than 100°C, and the method comprises a step of obtaining a white lignin-polysaccharide copolymer-containing solution.

### 2. White Lignin

In one embodiment, the production method of the present invention makes it possible to obtain white lignin characterized by at least having a content of the structure containing β-O-4 ether bonds of 50% or more (preferably further having a Hunter's whiteness (W) of 60 or more).

In one embodiment, the production method of the present invention makes it possible to obtain white lignin characterized by at least having a ratio of oxidized lignin structures of 0.3 or less (preferably further having a Hunter's whiteness (W) of 60 or more).

In one embodiment, the white lignin of the present invention may have a Hunter's whiteness (W) of 60 or more. The Hunter's whiteness is measured and calculated in accordance with the method described in Test Example 1-3 described later. The Hunter's whiteness (W) of the white lignin of the present invention is preferably 70 or more, more preferably 75 or more, even more preferably 80 or more, and still even more preferably 85 or more. The upper limit of the Hunter's whiteness (W) is not particularly limited, and is, for example, 98, 95, or 92. In addition, since the white color in the present invention is derived from the total reflection of light, the dissolved state in solution is transparent. It also has a characteristic that its mixture with a transparent resin and a paint can also be made transparent.

The white lignin of the present invention is lignin in a state isolated from biomass (including natural lignin). The bonding modes in natural lignin are diverse. Representative examples of the bonding modes in natural lignin include the following.

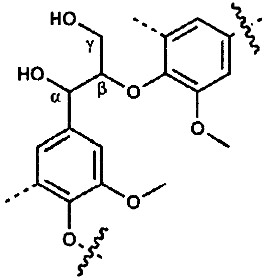

The above is called a β-O-4 bond.

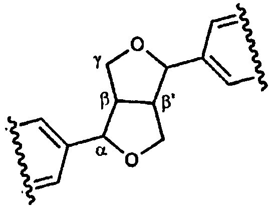

The above is called a resinol (β-β) bond.

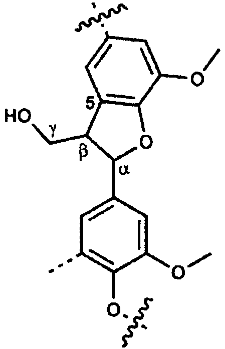

The above is called a phenylcoumaran (β-5) bond.

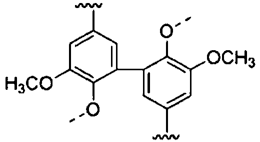

The above is called a 5-5 bond.

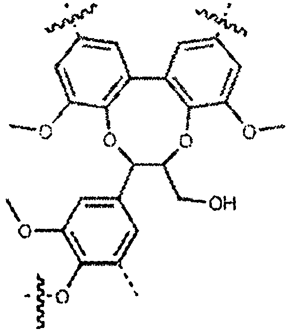

The above is called a dibenzodioxin (DBDO 5-5/4-O-β) bond.

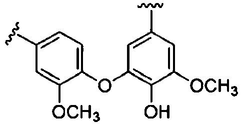

The above is called a 4-O-5 bond.

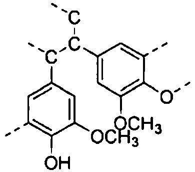

The above is called a β-1 bond.

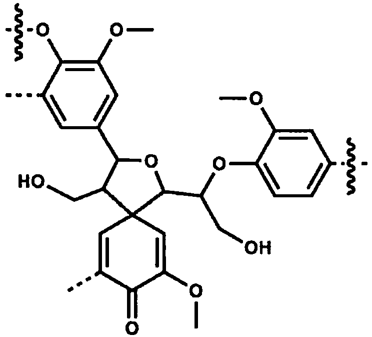

The above is called a spirodienone bond.

In natural lignin, the content of the structure containing β-O-4 ether bonds is highest among all of the bonding modes between the monolignols, although it also varies depending on plant species. For example, in softwood, the content of the same is considered to be 40 to 60%. Further, in hardwood, for example, the content of the same in eucalyptus is considered to be about 45%.

In the white lignin of the present invention, the content of the structure containing β-O-4 ether bonds is 50% or more, preferably 60% or more, more preferably 65 to 85%, and even more preferably 70 to 80%, among all of the bonding modes between the monolignols.

In the white lignin of the present invention, the content (%) of the structure containing β-O-4 ether bonds among all of the bonding modes between the monolignols is preferably 1.2x% or more, more preferably 1.4x% or more, and even more preferably 1.6x% or more, with the content of the same in the lignin in the biomass used as a raw material being defined as x%. In the above, the upper limit is preferably 2x%.

The content of the structure containing β-O-4 ether bonds among all of the bonding modes between the monolignols in lignin is specifically measured as follows. A sample is dissolved in deuterated dimethyl sulfoxide (DMSO-d₆) to 1 to 10 wt%, and an NMR spectrum is obtained using a Bruker Avance III 600 MHz NMR Spectrometer equipped with a low-temperature probe. The content of the structure containing β-O-4 ether bonds can be estimated from the signal volume in the HSQC (heteronuclear single-quantum correlation spectroscopy) spectrum. The content is calculated in terms of per 100 aromatic rings of lignin. An aromatic nucleus can be calculated from the sum of the signal integrated values of the syringyl nucleus 2,6-positions S_{2,6} (+ S'_{2,6})/2 and the guaiacyl nucleus 2-position G₂(+G'₂) (in the case of herbaceous plants, an H nucleus is also added), and the structure containing ether bonds can be calculated from the C-H spin bonding signals at the α-position (benzylic position) and the β-position. The quantitative value in the two-dimensional NMR method is corrected according to a document (Okamura, H. Nishimura, T. Nagata, T. Kigawa, T. Watanabe, and M. Katahira, Accurate and molecular-size-tolerant NMR quantitation of diverse components in solution, Scientific Reports, 6, 21742. 2016) to calculate the accurate content.

The white lignin of the present invention exhibits high solubility in acetic acid and ethanol, and has a solubility in acetic acid of 50 or more, preferably 70 or more, and more preferably 100 or more, and a solubility in ethanol of 30 or more, preferably 50 or more, and more preferably 60 or more, in terms of the NMR-DMSO-based solubility index defined in the present specification (described below).

The method for calculating the NMR-DMSO-based solubility index is as follows. 10 mg of lignin powder as a sample is weighed, dissolved in 0.5 mL of each of various NMR deuterated solvents, and subjected to quantitative 1H-NMR measurement. As the deuterated solvents, DMSO-d6, deuterated acetic acid-d4, deuterated water, deuterated ethanol d-6, and the like are used. The integrated values (6 to 8 ppm) of the aromatic region of the spectra obtained were acquired, the integrated value obtained from the 1H NMR spectrum of lignin dissolved in DMSO-d6 was defined as 100, and the ratio of the integrated value of lignin dissolved in each of the various deuterated solvents to the integrated value of lignin dissolved in DMSO-d6 was calculated. Thereby, the solubility in various solvents can be objectively and quantitatively calculated, and is defined as a DMSO-based solubility index. DSS (1 mM, chemical shift: 0 ppm) can be used as an internal spectral reference in quantification. In addition, 1 to 3% of deuterated DMSO (chemical shift: 39.6 ppm) can be added to each solvent and referenced as a reference.

The white lignin of the present invention is preferably characterized by having a solubility in 60 to 80% ethanol at 25°C of 2 w/v% or more. For this reason, by using the white lignin of the present invention, a self-assembled body described below is easily obtained, and a self-assembled body with high stability can be obtained. The solubility is preferably 4 w/v% or more, more preferably 5 w/v% or more, even more preferably 6 w/v% or more, and still even more preferably 7 w/v% or more.

The measurement method for the solubility is as follows. A sample is stirred and dissolved in ethanol at 25°C, and the resulting product is separated into an ethanol-soluble part and ethanol-insoluble part by solid-liquid separation. An aqueous ethanol solution at 25°C (1/1 = ethanol/water) is added to the ethanol-insoluble part, and the mixture is stirred for dissolution to obtain an aqueous ethanol solution-soluble part. The aqueous ethanol solution-soluble part is mixed with the ethanol soluble part to obtain a sample solution. The amount of the aqueous ethanol solution added is adjusted so that the ethanol concentration of the sample solution is in the range of 60 to 80%. In the step of obtaining the soluble part, dispersion and solubilization are performed with an ultrasonic cleaner at 28 kHz for 3 min, if necessary. The maximum sample concentration at which the sample solution is visually transparent is defined as "solubility in 60 to 80% ethanol at 25°C."

In the white lignin of the present invention, the constituent ratio of biphenyl-type lignin with a condensed structure is preferably 5% or less.

The white lignin of the present invention has a number average molecular weight (Mn) of preferably 0.7 to 9 kDa, more preferably 1 to 5 kDa, and even more preferably 1.5 to 4 kDa.

The white lignin of the present invention has a weight average molecular weight (Mw) of preferably 1 to 10 kDa, more preferably 1.5 to 8 kDa, and even more preferably 2 to 6 kDa.

In the present invention, the number average molecular weight (Mn) and weight average molecular weight (Mw) of lignin are specifically measured as follows. The molecular weight of lignin can be determined by size exclusion chromatography (SEC), i.e., gel permeation chromatography (GPC). A sample is dissolved in a solution of acetic anhydride and a base (e.g., pyridine) and reacted for 3 to 6 hours to obtain an acetylated product. The acetylated product is dissolved in tetrahydrofuran (THF) to a concentration of 2.0 mg/mL, and separation is performed by high-performance liquid chromatography. The columns for use are HZ-M columns (Tosoh Corporation, 150 mm × 4.6 mm id, 4 µm, three columns connected in series). The analysis is performed by injecting 10 µL of the sample at a column temperature of 40°C using tetrahydrofuran (THF) as the mobile phase at a flow rate of 0.35 mL/min. A mass calibration curve is prepared using standard polystyrene, Tosoh PStQuick C (molecular weights (MW): 2,110,000, 427,000, 37,900, and 5970), pinoresinol (MW: 352), and vanillin (MW: 152) to determine the Mw and Mn of the sample.

The white lignin of the present invention has a polydispersity (Mw/Mn) of preferably 2.5 or less, and more preferably 2 or less.

In the white lignin of the present invention, the ratio of oxidized lignin is preferably 0.5 or less, more preferably 0.3 or less, and even more preferably 0.1 or less.

The oxidized lignin is defined as one in which the hydroxy group at the benzylic position in a syringyl nucleus (S nucleus), a guaiacyl nucleus (G nucleus), and/or a p-hydroxyphenyl nucleus (H nucleus), all of which are basic structural units of lignin, is oxidized to form a ketone structure (α-carbonyl structure). Oxidation at the benzylic position contributes to coloration because the conjugated system of the aromatic ring is extended to the α-position. Conventionally, oxidation of lignin has been inevitable by artificial manipulation associated with the acquisition of lignin. Lignin is colored when oxidized by fine grinding, high-temperature and high-pressure conditions, and strong acid conditions. The ratio of oxidized lignin has been found to be an indicator of white lignin.

The ratio of oxidized lignin can be calculated as follows.

### Method for calculating oxidized lignin ratio

A sample is dissolved in deuterated dimethyl sulfoxide (DMSO-d6) to 1 to 10 wt%, and an NMR spectrum is obtained using a Bruker Avance III 600 MHz NMR Spectrometer equipped with a low-temperature probe. The constituent ratio of the oxidized lignin is calculated from the volume of signals on the spectra of heteronuclear single-quantum correlation spectroscopy (HSQC). For the signal integrated value, TopSpin 3.6 software available from Bruker Corporation is used. Because the region to be integrated is slightly shifted depending on the sample and the measurement environment, the signal integration region is appropriately adjusted at the time of analysis (this point also applies in the other measurement methods described in the present specification).
Syringyl nucleus 2,6-positions (S, δH/δC = 6.7 ± 0.2 ppm/103.6 ± 1.5 ppm region) Guaiacyl nucleus 2-position (G, δH/δC = 6.96 ± 0.2 ppm/111.1 ± 1.5 ppm region) Oxidized syringyl nucleus 2,6-positions (S', δH/δC = 7.21 ± 0.2 ppm/106.1 ± 1.2 ppm region) Oxidized guaiacyl nucleus 2-position (G', δH/δC = 7.45 ± 0.2 ppm/111.5 ± 1.2 ppm region) Oxidized lignin ratio (S) = [signal integrated value of region S']/[signal integrated value of region S] Oxidized lignin ratio (G) = [signal integrated value of region G']/[signal integrated value of region G].

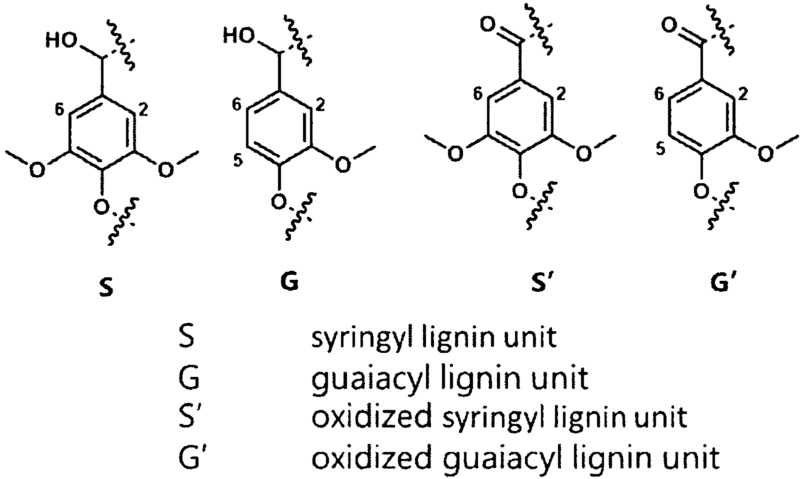

The white lignin of the present invention can be used in healthcare, cosmetics, dyes, resins, composite materials, and the like. In addition, the white lignin of the present invention is suitable as a starting material for various biomass conversion studies and reaction designs. The white lignin of the present invention can be colored in various colors (in particular, a color that cannot be expressed when the original color of lignin (brown, black) is mixed).

Regarding the white lignin, the present invention includes the following embodiments.

Item A13. White lignin having a content of a structure containing β-O-4 ether bonds of 50% or more (and preferably further having a Hunter's whiteness (W) of 60 or more).

Item A14. White lignin obtainable by the method of Item A11.

Item A15. White lignin having a ratio of oxidized lignin structures of 0.3 or less (and preferably further having a Hunter's whiteness (W) of 60 or more.

Item A16. White lignin having 6 or more, desirably 8 or more, more desirably 10 or more, and particularly desirably 12 or more peaks in total among peaks in a first derivative spectrum of an infrared absorption spectrum with hardwood, characterized by having positive peaks (convex upward) at 1007 to 1017 cm⁻¹, 1072 to 1082 cm⁻¹, 1108 to 1118 cm⁻¹, 1148 to 1154 cm⁻¹, 1179 to 1183 cm⁻¹, 1204 to 1210 cm⁻¹, 1257 to 1265 cm⁻¹, 1317 to 1321 cm⁻¹, and 2893 to 2921 cm⁻¹ and negative peaks (convex downward) at 1035 to 1041 cm⁻¹, 1130 to 1134 cm⁻¹, 1160 to 1167 cm⁻¹, and 1331 to 1337 cm⁻¹.

Item A17. White lignin having 4 or more, desirably 6 or more, more desirably 8 or more, and particularly desirably 10 or more peaks in total among peaks in a first derivative spectrum of an infrared absorption spectrum with softwood, characterized by having positive peaks (convex upward) at 1010 to 1035 cm⁻¹, 1070 to 1088 cm⁻¹, 1112 to 1126 cm⁻¹, 1198 to 1212 cm⁻¹, 1250 to 1261 cm⁻¹, and 1360 to 1365 cm⁻¹ and negative peaks (convex downward) at 1033 to 1047 cm⁻¹, 1144 to 1148 cm⁻¹, 1161 to 1171 cm⁻¹, 1226 to 1244 cm⁻¹, and 1270 to 1290 cm⁻¹.

Item A18. White lignin having 3 or more, desirably 4 or more peaks, and more desirably 5 or more peaks in total among peaks in a first derivative spectrum of an infrared absorption spectrum with herbaceous plants, characterized by having positive peaks (convex upward) at 1005 to 1011 cm⁻¹, 1055 to 1072 cm⁻¹, 1072 to 1082 cm⁻¹, and 1109 to 1126 cm⁻¹ and negative peaks (convex downward) at 1030 to 1041 cm⁻¹ and 1128 to 1136 cm⁻¹.

### 3. White Lignin-polysaccharide Copolymer

In one embodiment, the production method of the present invention makes it possible to obtain a white lignin-polysaccharide copolymer containing at least one bond selected from the group consisting of an α-ether bond between lignin and polysaccharide, an α-ester bond between lignin and polysaccharide, and a γ-ester bond between lignin and polysaccharide (and preferably further having a Hunter's whiteness (W) of 60 or more).

In one embodiment, the white lignin-polysaccharide copolymer of the present invention may have a Hunter's whiteness (W) of 60 or more. The Hunter's whiteness is measured and calculated in accordance with the method described in Test Example 1-3 described later. The Hunter's whiteness (W) of the white lignin-polysaccharide copolymer of the present invention is preferably 70 or more, more preferably 75 or more, even more preferably 80 or more, and still even more preferably 85 or more. The upper limit of the Hunter's whiteness (W) is not particularly limited, and is, for example, 98, 95, or 92.

Examples of polysaccharides include xylan and mannan as representatives, and also include glucomannan, galactoglucomannan, glucuronoxylan, and arabinoglucuronoxylan. Hemicelluloses are mainly composed of glucomannan in softwood, glucuronoxylan in hardwood, and arabinoxylan in herbaceous plants. In the above, the monomers include xylose, arabinose, glucose, mannose, galactose, and uronic acid. The side chains include an acetyl group and a methoxy group. Hemicelluloses in herbaceous plants include one in which ferulic acid and diferulic acid are bound to the arabinose side chain of arabinoxylan.

The white lignin-polysaccharide copolymer of the present invention is a lignin-polysaccharide copolymer that can be homogeneously dispersed in a separating solvent and is characterized by a polymeric structure in which lignin and a polysaccharide are copolymerized by covalent bonding. The white lignin-polysaccharide copolymer of the present invention is isolated by cleaving by a hydrolysis reaction a small portion of the bonds (not more than 10% of the bonds) in the hemicellulose main chain in the lignin-polysaccharide composite structure in the plant cell wall. By performing the hydrolysis reaction under mild conditions, over-decomposition, side reactions, and molecular weight reduction can be suppressed.

The white lignin-polysaccharide copolymer of the present invention is characterized by having at least one bond selected from the group consisting of an α-ether bond (LCα-ether bond) between lignin and polysaccharide, an α-ester bond (LCα-ester bond) between lignin and polysaccharide, and a γ-ester bond (LCγ-ester bond) between lignin and polysaccharide.

In the white lignin-polysaccharide copolymer of the present invention, the α-ether bond (LCα ether) between lignin and polysaccharide, which is a copolymerization point, is preferably concentrated to 1.2 times or more of the original bonding unit constituent ratio of biomass as a starting material.

Within the biomass, lignin and polysaccharides are also bound by non-covalent bonding. Non-covalent bonding is due to hydrophobic interactions, hydrogen bonding, electrostatic interactions, and polymer chain entanglement. Therefore, there is no clear evidence in prior studies that polymers having different properties, such as lignin and polysaccharides, form a copolymer by covalent bonding in a lignin-polysaccharide copolymer. In addition, the preparation of a lignin-polysaccharide copolymer by a conventional method is performed in multiple stages, and the yield is low (less than 5%) or the purity is low (the signal relative integrated value at the α-position of the LCα-ether bond per 100 aromatic rings is 1.5 or less).

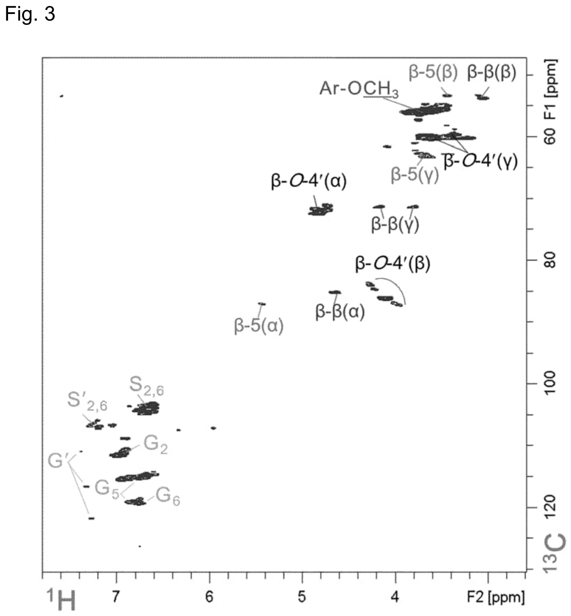

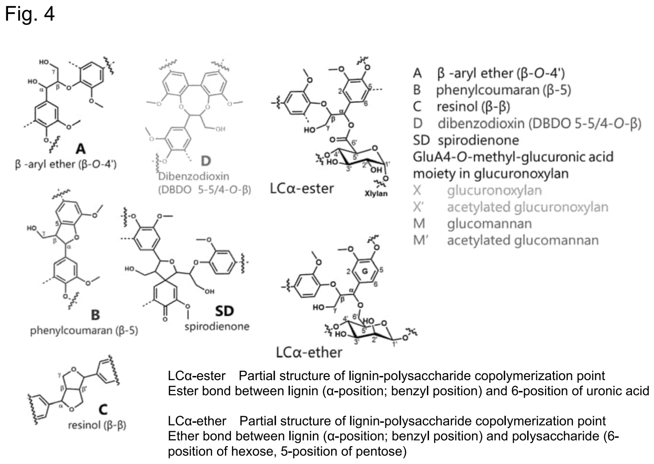

Clear evidence of copolymerization points (covalent bond) in a lignin-hemicellulose copolymer can be confirmed by signal attribution by the HSQC method, which is a two-dimensional NMR spectroscopy (Figs. 3 and 4). Clearer evidence can be confirmed by serial correlation analysis by HMBC and TOCSY-HSQC methods. For more details, reference can be made to a document (Nishimura et al., Direct evidence for α ether linkage between lignin and carbohydrates in wood cell walls, Sci. Rep. 2018).

### LCα ether

The C-H correlation signal at the α-position of lignin (LC ether, δH/δC = 4.50±0.15 ppm/80.1±1 ppm region) and (LC ether, δH/δC = 4.95±0.2 ppm/81.5+1.5 ppm region), derived from the ether bond between the 6th position of hexose or the hydroxy group of pentose and the α-position (benzyl) of lignin.

### LCα ester

The C-H correlation signal at the α-position of lignin (LCα ester, δH/δC = 5.88±0.15 ppm/74.0±1.5 ppm region), derived from the ester bond between the carboxy group at the 6th position of glucuronic acid (uronic acid) and the α-position (benzyl) of lignin.

### LCγ ester

The C-H correlation signal at the γ-position of lignin (LCγ ester, δH/δC = 4.0±0.15 ppm, 4.4±0.15 ppm, /64.8±1.5 ppm region), derived from the ester bond between the carboxyl group at the 6th position of glucuronic acid (uronic acid) and the γ-position of lignin.

The white lignin-polysaccharide copolymer of the present invention is preferably characterized by having a solubility in 60 to 80% ethanol at 25°C of 2 w/v% or more. For this reason, by using the white lignin-polysaccharide copolymer of the present invention, a self-assembled body described below is easily obtained, and a self-assembled body with high stability can be obtained. The solubility is preferably 4 w/v% or more, more preferably 5 w/v% or more, even more preferably 6 w/v% or more, and still even more preferably 7 w/v% or more.

The white lignin-polysaccharide copolymer of the present invention exhibits high solubility in acetic acid and ethanol and is characterized by having a solubility in acetic acid of 50 or more, preferably 70 or more, and more preferably 100 or more, and a solubility in ethanol of 30 or more, preferably 50 or more, and more preferably 60 or more, in terms of the NMR-DMSO-based solubility index defined in the present specification (described below).

In the white lignin-polysaccharide copolymer of the present invention, in particular, the bonding unit constituent ratio of LCα ether and LCα ester, which are copolymerization points, is preferably 2% or more, and more preferably 5% or more, based on the ratio of aromatic rings of lignin.

In the white lignin-polysaccharide copolymer of the present invention, the constituent ratio of polysaccharides to lignin is preferably 0.1 to 2, and more preferably 0.3 to 1.

The white lignin-polysaccharide copolymer of the present invention has a molecular weight (Mw) of preferably 1 to 15 kDa, and more preferably 2 to 7 kDa. The lignin-polysaccharide copolymer of the present invention has a polydispersity (Mw/Mn) of preferably 3.5 or less, and more preferably 2.5 or less.

The measurement methods for the above parameters are in accordance with the measurement methods for the white lignin of the present invention, the measurement methods of Examples described below, or known methods.

Regarding the white lignin-polysaccharide copolymer, the present invention includes the following embodiments.

Item A16. A white lignin-polysaccharide copolymer having at least one bond selected from the group consisting of an α-ether bond between lignin and polysaccharide, an α-ester bond between lignin and polysaccharide, and a γ-ester bond between lignin and polysaccharide (and preferably further having a Hunter's whiteness (W) of 60 or more).

Item A20. White lignin or a white lignin-polysaccharide copolymer soluble in deuterated acetic acid, having an NMR-DMSO-based solubility index of 50 or more, preferably 60 or more, even more preferably 80 or more, and still even more preferably 100 or more; or
white lignin or a white lignin-polysaccharide copolymer soluble in deuterated ethanol, having an NMR-DMSO-based solubility index of 30 or more, preferably 40 or more, more preferably 50 or more, and even more preferably 60 or more.

Item A21. A white lignin-polysaccharide copolymer obtainable by the method of Item A12.

### 4. Structured Material

In one embodiment, the present invention relates to a structured material of white lignin and/or a white lignin-polysaccharide copolymer. The details are described below.

The structured material may be a structured material of white lignin alone, a structured material of a white lignin-polysaccharide copolymer alone, or a structured material of a combination of white lignin and a white lignin-polysaccharide copolymer.

In one embodiment, the structured material is a complex of white lignin and/or a white lignin-polysaccharide copolymer with an organic acid and/or a salt (structured material 1).

In the present invention, it has been found that the white lignin and/or white lignin-polysaccharide copolymer has excellent solubility and dispersibility in solvents, and has, as a molecular structure, the characteristic that branched structures and colored structures are far fewer than those in other lignins and/or lignin-polysaccharide copolymers, thus enabling the above complex to be favorably obtained.

In one embodiment, the "complex" in structured material 1 refers to a crystal in a broad sense, and encompasses co-crystals, salts and hydrates, pseudopolymorphs, solvates, and crystalline polymorphs thereof.

Structured material 1 has a structure different from those of the white lignin and/or the white lignin, and the organic acid and/or the salt. Specifically, for example, structured material 1 has a unique spectral structure in at least one wavenumber range selected from the group consisting of 1080 to 950 cm⁻¹, 1480 to 1350 cm⁻¹, and 3000 to 2900 cm⁻¹ in a first derivative spectrum of an infrared absorption spectrum. Structured material 1 has preferably 2, more preferably 3, even more preferably at least 4, and particularly preferably 5 or more unique spectral structures in any of the wavenumber ranges in the group described above.

The organic acid that forms structured material 1 is not particularly limited. Examples include maleic acid, formic acid, acetic acid, propionic acid, folic acid, isobutyric acid, valeric acid, isovaleric acid, pyruvic acid, oxalic acid, malonic acid, succinic acid, glutaric acid, ketoglutaric acid, adipic acid, lactic acid, tartaric acid, fumaric acid, oxalacetic acid, malic acid, isocitric acid, citric acid, benzoic acid, phthalic acid, isophthalic acid, terephthalic acid, glucuronic acid, glyoxylic acid, hemimellitic acid, trimellitic acid, trimesic acid, mellophanic acid, prehnitic acid, pyromellitic acid, mellitic acid, methanesulfonic acid, benzenesulfonic acid, p-toluenesulfonic acid, camphorsulfonic acid, p-toluenesulfinic acid, benzenesulfinic acid, and the like.

The organic acid may also include amino acids. Examples of amino acids include amino acids basic side chains, such as lysine, arginine, and histidine; amino acids with acidic side chains, such as aspartic acid and glutamic acid; amino acids with uncharged polar side chains, such as glycine, asparagine, glutamine, serine, threonine, tyrosine, and cysteine; amino acids with nonpolar side chains, such as alanine, valine, leucine, isoleucine, proline, phenylalanine, methionine, and tryptophan; amino acids with β-branched side chains, such as threonine, valine, and isoleucine; amino acids with aromatic side chains, such as tyrosine, phenylalanine, tryptophan, and histidine; and the like. The organic acid may also include fatty acids.

As the organic acid, it is preferable to use an organic acid that is solid at room temperature (20°C).

The organic acids can be used singly or in a combination of two or more.

The salt that forms structured material 1 is not particularly limited as long as it is a compound containing an anion of an organic acid (e.g., the organic acid described above) or an inorganic acid, or a halide ion, and an inorganic cation or an organic cation.

Examples of inorganic acids include hydrochloric acid, sulfuric acid, nitric acid, carbonic acid, boric acid, boronic acid, hydrofluoric acid, hypochlorous acid, chlorous acid, chloric acid, perchloric acid, hypobromous acid, bromous acid, bromic acid, perbromic acid, hypoiodous acid, iodous acid, iodic acid, periodic acid, phosphorous acid, phosphoric acid, polyphosphoric acid, chromic acid, permanganic acid, and the like. Examples of halide ions include fluoride ions, chloride ions, bromide ions, iodide ions, and the like.

Examples of inorganic cations include metal ions. Examples of metals include typical metals (alkali metals: Li, Na, K, Rb, and Cs; alkaline earth metals: Ca, Sr, Ba, and Ra) ; magnesium group elements: Be, Mg, Zn, Cd, and Hg; aluminum group elements: Al, Ga, and In; rare earth elements: Y, La, Ce, Pr, Nd, Sm, and Eu; tin group elements: Ti, Zr, Sn, Hf, Pb, and Th; iron group elements: Fe, Co, and Ni; earth acid elements: V, Nb, and Ta; chromium group elements: Cr, Mo, W, and U; manganese group elements: Mn and Re; noble metals: Cu and Ag; and the like.

Examples of organic cations include, but are not limited to, ammonium ions (i.e., NH₄⁺) and substituted ammonium ions (e.g., NH₃R^{X+}, NH₂R^{X}₂⁺, NHR^{X}₃⁺, and NR^{X}₄⁺).

Specific examples of the salt include sodium acetate, zinc chloride, ammonium acetate, and the like.

The salts may be used singly or in a combination of two or more.

Structured material 1 may contain a divalent or higher organic acid and/or a salt containing a divalent or higher metal ion as the organic acid and/or the salt. In this case, the white lignin and/or the white lignin-polysaccharide copolymer is more likely to form a network structure, making it easier to obtain a gel.

Structured material 1 may be in the form of, for example, a solid (e.g., a powder), a sol, or a gel.

Structured material 1 is useful, for example, as an UV protection material. Formulation using structured material 1 is a promising form for stable application development, and offers advantages in terms of, for example, stabilization, and transportation, delivery, storage, and addition at room temperature.

Structured material 1 can be produced by a method comprising mixing white lignin and/or a white lignin-polysaccharide copolymer, an organic acid and/or a salt, and a solvent to obtain a solution or a dispersion, and reducing the solvent from the solution or the dispersion.

The solvent is not particularly limited as long as it can dissolve or uniformly disperse the white lignin and/or the white lignin-polysaccharide copolymer, and the organic acid and/or the salt. Examples of solvents include water, alcohols, acetic acid, dimethyl sulfoxide, dioxane, pyridine, ionic liquids, deep eutectic solvents, and the like. The solvent may be a mixed solvent of two or more solvents.

The mixing order is not particularly limited. For example, the order may be such that the white lignin and/or the white lignin-polysaccharide copolymer is added to the solvent, and then the organic acid and/or the salt is added, or may be such that the white lignin and/or the white lignin-polysaccharide copolymer is added to solvent 1, while the organic acid and/or the salt is added to solvent 2, and the resulting two liquids are then mixed.

The temperature during mixing is not particularly limited, and may be, for example, 4 to 50°C, and preferably 15 to 30°C.

The concentration of the organic acid and/or the salt in the solution or the dispersion is preferably 0.01 mg/mL or more, more preferably 0.02 mg/mL or more, even more preferably 0.05 mg/mL or more, still even more preferably 0.07 mg/mL or more, and further still even more preferably 0.08 mg/mL or more, from the viewpoint of the formation efficiency of structured material 1 and the like. The upper limit of the concentration is not particularly limited, and is, for example, 1000 mg/mL, 700 mg/mL, 500 mg/mL, 300 mg/mL, 200 mg/mL, 100 mg/mL, or 50 mg/mL.

The concentration of the white lignin and/or the white lignin-polysaccharide copolymer in the solution or the dispersion is preferably 0.01 mg/mL or more, more preferably 0.02 mg/mL or more, even more preferably 0.05 mg/mL or more, still even more preferably 0.1 mg/mL or more, further still even more preferably 0.2 mg/mL or more, and particularly preferably 0.3 mg/mL or more, from the viewpoint of the formation efficiency of structured material 1 and the like. The upper limit of the concentration is not particularly limited, and is, for example, 100 mg/mL, 70 mg/mL, 50 mg/mL, 30 mg/mL, 20 mg/mL, or 15 mg/mL.

The method for reducing the solvent from the solution or the dispersion is not particularly limited as long as a complex can be formed. Particularly preferred is, for example, lyophilization, which involves a cooling step and a pressure reduction step.

Structured material 1 is excellent in usability as a formulation.

In the present invention, it has been found that structured material 1 forms a network structure and undergoes sol/gel formation. Examples of sol/gel include hydrosol/gel, organosol/gel, and the like. The white lignin and/or the white lignin-polysaccharide copolymer can be mixed with a crosslinking agent or a solution (e.g., an aqueous solution) containing a crosslinking agent, and dissolved or uniformly dispersed to form a sol/gel. Sol/gel formation can be optimized by known methods (adjustment of the concentration of constituent components, concentration, temperature control, pH control). The crosslinking agent may be an organic substance or an inorganic substance, and a molecule capable of hydrogen bonding or coordination with lignin can be used. An organic substance having a plurality of carboxylic acid, aldehyde, ketone, amine, or ether structures in the molecule, or a divalent or higher metal ion can be used.

The present invention relates to an adsorbent, recovery agent, removal agent, or transport agent for a metal ion or a salt containing the same, comprising white lignin and/or a white lignin-polysaccharide complex, as one embodiment using the formation of structured material 1. The white lignin and/or the white lignin-polysaccharide complex can be used to adsorb, recover, remove, or transport a metal ion or a salt containing the same by forming a complex with the metal ion or the salt containing the same.

The white lignin and/or the white lignin-polysaccharide complex, agents thereof, and structured material 1 can be used, specifically, for example, in the removal of metal ions in the manufacturing process of pharmaceuticals and foods, bioremediation (removal of heavy metals, water purification, soil purification), protection of metal catalysts, carriers, storage, energy carriers, additives to electrolytes, recovery of noble metals and rare metals, and the like.

In one embodiment, the structured material is a material in which a hydroxy group of white lignin and/or a white lignin-polysaccharide copolymer is modified or substituted (structured material 2).

In the present invention, focusing on the feature that the white lignin and/or the white lignin-polysaccharide copolymer has few branched structures, is a linear aromatic polymer, and has a high content of aryl ether bonding units in the molecule, the focus is placed on modifying or substituting a hydroxy group of the white lignin and/or the white lignin-polysaccharide copolymer.

The material in which a hydroxy group is modified or substituted is not particularly limited as long as it is obtained by, for example, oxidation (carbonylation), halogenation, amination, boron modification, acylation, or crosslinking with another structure, of a hydroxy group (e.g., α-position (secondary hydroxy group), γ-position (primary hydroxy group), phenolic hydroxy group) of the white lignin and/or the white lignin-polysaccharide copolymer. In one embodiment of the present invention, structured material 2 contains at least one structure selected from the group consisting of a carbonylated structure, a halogenated structure, an aminated structure, a boron-modified structure, an acylated structure, and a crosslinked structure.

Structured material 2 containing a carbonyl modification structure (oxidized lignin/lignin-polysaccharide copolymer) is an important intermediate for complex formation, derivatization, functionalization, and crosslinking. Due to the expansion of the conjugated system, it exhibits a red color and has ultraviolet-visible light absorption ability. The reaction between visible light and a photocatalyst enables the production reaction of lignin monomers and lignin dimers by ether bond cleavage of lignin.

The references for the following reactions are as follows: ACS Catalysis 2019, 9 (3), 2252-2260, DOI: 10.1021/acscatal.8b04172, and Nature 515, 249-252 (2014).

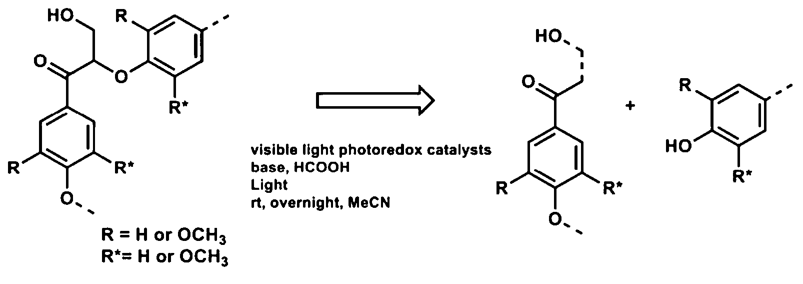

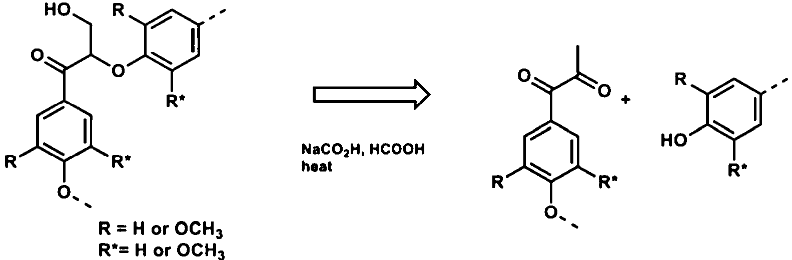

Structured material 2 containing a halogen modification structure (halogenated lignin/lignin-polysaccharide copolymer) has improved stability, hydrophobicity, etc. by fluorinating a hydroxy group that serves as a starting point for a reaction, an ionic bond, and a hydrogen bond.

Typical structural units contained in the white lignin and white lignin-polysaccharide copolymer are shown below.

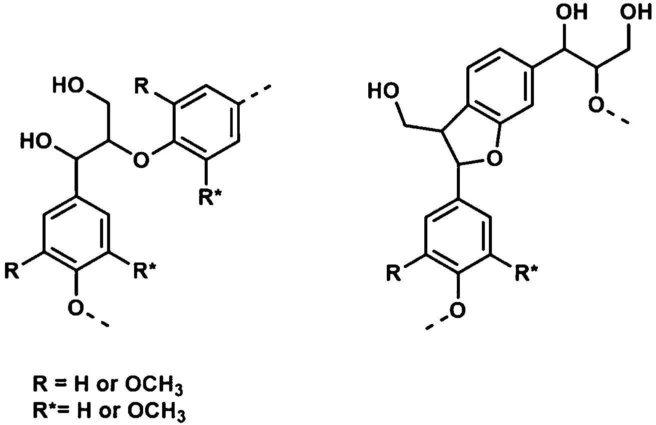

Typical structural units contained in the oxidized white lignin and white lignin-polysaccharide copolymer are shown below.

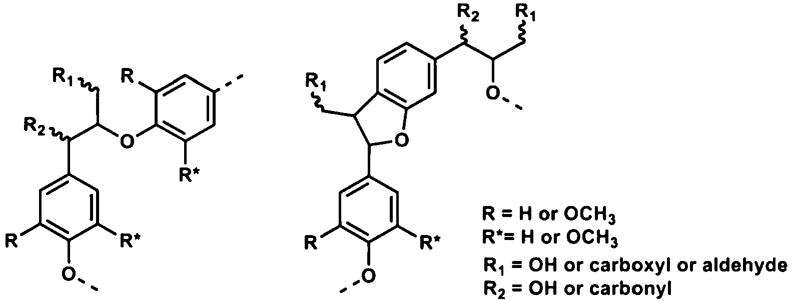

Structural units contained in the oxidized white lignin and white lignin-polysaccharide copolymer are shown below.

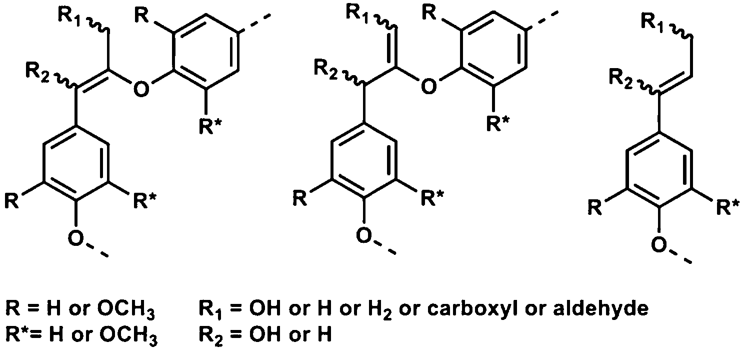

Typical structural units contained in the fluorinated white lignin and white lignin-polysaccharide copolymer are shown below.

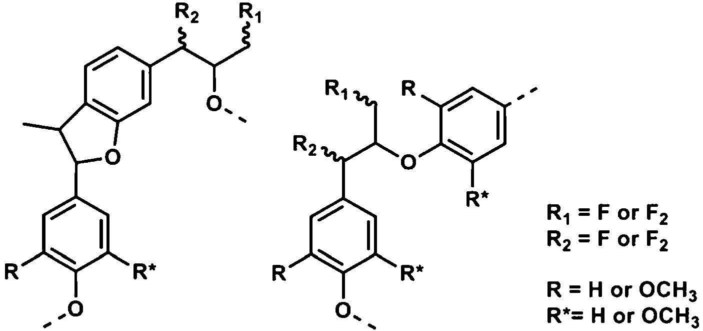

The modification or substitution of a hydroxy group can be carried out according to known methods regarding the modification or substitution of lignin hydroxy groups. In particular, the methods of oxidation (carbonylation), halogenation, amination, boron modification, acylation, and crosslinking with another structure described above are widely known; thus, methods following or in accordance with these methods can be used.

### Value in Industrial Applicability

### Conventional Art

A gel of a mixture of lignin and a polysaccharide, such as chitosan (https://doi.org/10.1016/j.msec.2019.04.038)
A reaction product with a formaldehyde crosslinking agent (US4244728A)
A reaction product with a crosslinking agent, such as chlorohydrin (US4131573A)

The reaction products with the crosslinking agents are irreversible because the lignin skeleton itself becomes a crosslinked structure.

### Present Invention

It has been found that a structured material is obtained by non-covalent bonding through an extremely simple step of adding a salt or an organic acid to lignin alone or a lignin polysaccharide copolymer. Since it is not crosslinked by covalent bonding, the structured material of the present invention can be reversibly returned to its original state, that is, it is a recyclable material.

The newly emerged characteristics of an infrared absorption spectrum in the lignin structured material mean the formation of a partial ordered structure and self-assembly through non-covalent bonding. This can also be confirmed by a Raman spectrum and a UV spectrum.

In the structured material with an acetic acid salt, the UV-A and UV-B ultraviolet protection ability is increased approximately 4-fold compared with that of lignin before structurization. This is enhancement of functionalization of lignin as an ultraviolet absorber or ultraviolet scattering agent.

In addition to the cosmetics field, the gel is expected to have a significant impact on a wide range of industrial fields, including the medical field (e.g., medical gel), the electronic material field (e.g., electric conductors and capacitors), the surface processing and treatment field (e.g., paints and adhesives), build materials for 3D printers, as well as functional gels that respond to stimuli and temperature.

It is noteworthy that the structured material is derived from wood, which is a natural source, and not from fossil fuels; thus, the structured material is human-friendly and earth-friendly.

### Examples

The present invention will be described in detail below with reference to Examples, but the present invention is not limited by these Examples.

### Reference Test Example 1. Lignin, lignin-polysaccharide copolymer, hemicellulose, cellulose-hemicellulose complex, and isolation of cellulose

Lignin, lignin-polysaccharide copolymers, hemicelluloses, cellulose-hemicellulose complexes, and cellulose were isolated from biomass in accordance with an M-APA method, an A-APA method, or these methods with altered conditions. The yield, the physical properties, etc. of the isolated products were measured. The isolation methods according to the present invention are capable of isolating soluble lignin, lignin-polysaccharide copolymers, hemicelluloses, cellulose-hemicellulose complexes, and cellulose from natural polymers in biomass with high efficiency, and include a step (A) of bringing a solution containing an organic acid and a peracid into contact with plant biomass. The specific procedure is described below.

### Reference Test Example 1-1. Preparation of finely milled wood flour

A fine powder (finely milled wood flour) with a volume average particle size of 10 µm (1 to 100 µm) was prepared from wood flour of hardwood (eucalyptus or Japanese beech), softwood (*Pinus densiflora,* Japanese cedar, or cypress), or an herbaceous plant (bagasse (sugarcane) or bamboo) by using a ball mill or a bead mill method. As bamboo, *Phyllostachys edulis* powder (produced in Fukuoka prefecture, Kyushu, triennial) was used.

An example of preparation methods using a ball mill is described below. A planetary ball mill (P-6, Fritsch GmbH) was used. 2 g of wood flour and 100 g of zirconia beads with a diameter of 3 mm were placed in an 80-cc agate container and sealed in two overpots. After the overpots were vacuumed for 20 minutes, nitrogen gas (inert gas) was injected. A cycle composed of milling for 1 minute and a pause for 1 minute and 20 seconds was performed 180 times at 550 rpm (3 hours in total). The operation under the above conditions provides a fine wood flour while limiting oxidation during milling and denaturation due to heating.

### Reference Test Example 1-2. Preparation of wood flour

1 g of wood flour or wood chips (10 mm × 10 mm × 1 mm) of hardwood (eucalyptus or Japanese beech), softwood (*Pinus densiflora,* Japanese cedar, or cypress), or a herbaceous plant (Bagasse (sugarcane) or bamboo) was placed in each of the two pots on the left and right of a mixer mill (MM301 available from Retsch). Milling was performed under the conditions of a grinding time of 5 minutes and a frequency of 1/15 sec, thus obtaining a powder (wood flour) with a volume average particle size of 0.1 mm.

### Reference Test Example 1-3. M-APA method (Milling-Acid-PerAcid Method)

For a starting material, the finely milled wood flour (average particle size: 10 µm) obtained in Reference Test Example 1-1 was used. 2 g of finely milled wood flour and 10 mL of an acetic acid-peracetic acid-containing solution (composition: 17.4 M acetic acid 99%, 0.14 M peracetic acid less than 1%, 0.01 M hydrogen peroxide, and a trace amount of water) were placed in a vial for the Initiator and irradiated with microwaves for 10 minutes at 50°C with an initial power of 400 W and at a stirring speed of 600 rpm using an Initiator+ 60 microwave synthesizer (Biotage). After the soluble part was treated with microwaves, 10 mL of a separating solvent (acetone) was added, followed by separation by spin-down (RCF 8000 × g, 5 min). The insoluble part was extracted with 10 mL of a separating solvent (acetone) and washed three times, and combined with the soluble part. This soluble lignin is referred to as acid peracid lignin (APA lignin).

The insoluble part was subjected to the same extraction operation with the microwave heating condition changed to 140°C as the second step. The soluble part is referred to as a lignin-hemicellulose copolymer. An insoluble part containing cellulose as a main component was obtained.

### Reference Test Example 1-4. A-APA method (Alkali-Acid-PerAcid method)

For a starting material, the wood flour (average particle size: 0.1 mm) obtained in Reference Test Example 1-2 was used. A 0.25 M sodium hydroxide solution was prepared (1 N diluted 4 times). 2.4 mL of the 0.25 M sodium hydroxide solution was added to 0.3 g of wood flour, followed by microwave extraction treatment (100°C, 30 min). A rough indication of the required amount of an alkali is 1 mmol of NaOH per gram of wood flour.

After microwave treatment, the soluble part and the insoluble part can be easily separated by decantation, spin-down, or filtration. Extraction with acetone (separating solvent) was additionally performed three times, and the extract was combined with the soluble part. From the insoluble part, acid peracid lignin (APA lignin) and a lignin-hemicellulose copolymer were obtained as soluble lignin according to the same extraction method as the M-APA method of Reference Test Example 1-3. An insoluble part containing cellulose as a main component was obtained.

### Reference Test Example 1-5. Study of conditions

Instead of acetic acid, other organic acids (formic acid, glyoxylic acid) were used for the study. Additionally, another peracid (hydrogen peroxide) was used instead of peracetic acid. For another peracid (hydrogen peroxide), the composition was changed as follows: acetic acid concentration: 12 M; hydrogen peroxide concentration: as shown in the table shown below.

The study was conducted by changing the temperature at which plant biomass or an insoluble part comes in contact with an organic acid and a peracid to a temperature ranging from room temperature to 180°C. At this time, the heating method was also changed from the internal heating method using microwave heating to an external heating method using an oil bath to conduct the study.

### Reference Test Example 1-6. Analysis and measurement method

Lignin, lignin-polysaccharide copolymers, and cellulose were analyzed and measured according to the following methods.

### Reference Test Example 1-6-1. Measurement method for molecular weight (Mn, Mw, and degree of polydispersity)

The molecular weight was determined by size exclusion chromatography (SEC), i.e., gel permeation chromatography (GPC). A sample was dissolved in a solution of acetic anhydride and a base (e.g., pyridine), and reacted for 3 to 6 hours to obtain an acetylated product. The acetylated product was dissolved in tetrahydrofuran (THF) to a concentration of 2.0 mg/mL, and separation was performed by high-performance liquid chromatography (high-pressure gradient SEC analysis system available from Shimadzu Corporation). The columns for use were HZ-M columns (Tosoh Corporation, 150 mm × 4.6 mm id, 4 µm, three columns connected in series). The analysis was performed by injecting 10 µL of the sample at a column temperature of 40°C using tetrahydrofuran (THF) as the mobile phase at a flow rate of 0.35 mL/min. A mass calibration curve was prepared using standard polystyrene, Tosoh PStQuick C (molecular weights (MW): 2,110,000, 427,000, 37,900, and 5970), pinoresinol (MW: 352), and vanillin (MW: 152) to determine the weight average molecular weight Mw and the number average molecular weight Mn of the sample. The degree of polydispersity was determined as Mw/Mn.

### Reference Test Example 1-6-2. Method for calculating constituent ratio of bonding units of molecule

A sample was dissolved in deuterated dimethyl sulfoxide (DMSO-d6) to 1 to 10 wt%, and an NMR spectrum was obtained using a Bruker Avance III 600 MHz NMR Spectrometer equipped with a low-temperature probe. The constituent ratio of the interunit bonding units of lignin was calculated from the volume of signals on the spectra of heteronuclear single-quantum correlation spectroscopy (HSQC). The constituent ratio was calculated as a ratio per 100 aromatic rings of lignin. The content of the ether-type bonding units was estimated from the sum of the integrated values of the C-H correlation signal at the β position (δH/δC = the region of 4.0 ± 0.2 ppm/85.6 ± 1.2 ppm, δH/δC = the region of 4.3 ± 0.2 ppm/83.0 ± 0.7 ppm). The quantitative value in the two-dimensional NMR method was corrected according to the TAF method described in a document (H. Okamura, H. Nishimura, T. Nagata, T. Kigawa, T. Watanabe, and M. Katahira, Accurate and molecular-size-tolerant NMR quantitation of diverse components in solution, Scientific Reports, 6, 21742. 2016) to calculate the accurate content.

### Reference Test Example 1-6-3. Method for calculating constituent ratio of lignin and polysaccharides

The sum of integrated values of the C-H correlation signals at the anomeric position (first position) of polysaccharides was calculated according to the NMR method described above and corrected according to the TAF method, followed by calculating the ratio per 100 aromatic rings of lignin.

### Reference Test Example 1-6-4. Method for calculating constituent ratio of lignin-polysaccharide copolymerization sites

In the same manner as described above, the sum of integrated values of the C-H correlation signals derived from the bonding units of the LCα ether and the LCα ester (LC ether, δH/δC = the region of 4.50 ± 0.15 ppm/80.1 ± 1 ppm; LC ester, δH/δC = the region of 5.88 ± 0.15 ppm/74.0 ± 1.5 ppm) was calculated according to the two-dimensional HSQC NMR method and corrected according to the TAF method, followed by calculating the ratio per 100 aromatic rings of lignin. In the A-APA method, although some of the ester bonds are hydrolyzed by an alkali treatment, an LCα ester-type lignin-hemicellulose copolymer can also be obtained.

### Reference Test Example 1-6-5. Method for calculating yield from raw material biomass

Each of the obtained components was confirmed with a pH meter, pH test paper, or peracid test paper (potassium iodide starch paper), and then neutralized and subjected to peracid quenching as necessary. Neutralization was performed by adding 1 N HCl or 1 N NaOH in small amounts stepwise. Peracid quenching was performed by adding a 1 M aqueous sodium sulfite solution dropwise. The organic solvent was distilled off by using an evaporator. Subsequently, a dry powder was obtained by lyophilization. When a salt was produced by neutralization, the concentrated solution obtained after distillation of the organic solvent was re-extracted with a separating solvent (acetone) and desalted. Thereafter, the solvent was distilled off again with an evaporator, followed by lyophilization, thus obtaining a dry powder. Each of the obtained components was weighed, and the yield per raw material biomass was calculated.

### Results

A polymer with a desirable molecular structure, molecular weight, and yield can be obtained under the following conditions. Tables 1 to 7 show the results.

Table 1 shows the peracid conditions and the yield of each component of polymeric lignocellulose in the two-stage microwave extraction reaction according to the M-APA method (wt%, raw-material biomass ratio, raw material: eucalyptus).

**Table 1**

| Peracid concentration conditions | Peracetic acid 1% 0.14 mol/L | H₂O₂ 0.4% 0.11 mol/L | H₂O₂ 3.2% 1.0 mol/L | H₂O₂ 4.2% 1.4 mol/L |
|---|---|---|---|---|
| APA lignin | 7 | 6 | 9 | 11 |
| Lignin-hemicellulose copolymer | 12 | 11 | 14 | 25 |
| Residual cellulose | 79 | 82 | 75 | 63 |
| Total yield | 98 | 98 | 98 | 99 |

Table 2 shows the yield of each component of polymeric lignocellulose of various kinds of biomass in the two-stage microwave extraction reaction according to the A-APA method (wt%, raw-material biomass ratio).

**Table 2**

| | Hardwood | | Softwood | | | Herbaceous plant | |
|---|---|---|---|---|---|---|---|
| Raw material biomass plant species | Eucalyptus | Japanese beech | *Pinus densiflora* | Japanese cedar | Cypress | Bagasse (Sugarcane) | Bamboo |
| Weakly alkaline soluble lignin | 21 | 22 | 26 | 20 | 19 | 33 | 32 |
| APA lignin | 5 | 5 | 4 | 5 | 6 | 4 | 5 |
| Lignin-hemicellulose copolymer | 32 | 23 | 14 | 14 | 12 | 12 | 15 |
| Total soluble part | 58 | 51 | 44 | 40 | 37 | 50 | 51 |
| Residual cellulose | 44 | 39 | 58 | 65 | 61 | 48 | 52 |
| Total | 102 | 90 | 103 | 105 | 98 | 98 | 104 |

Table 3 shows the peracid conditions and the molecular weight of each component of polymeric lignocellulose in the two-stage microwave extraction reaction according to the M-APA method (GPC analysis values of acetylated products).

**Table 3**

| | | | |
|---|---|---|---|
| Eucalyptus Peracetic acid 1% | Mn | Mw | Mw/Mn |
| APA lignin | 3814 | 7927 | 2.1 |
| Lignin-hemicellulose copolymer | 4203 | 8513 | 2.0 |
| Eucalyptus H₂O₂0.4% | Mn | Mw | Mw/Mn |
| APA lignin | 3510 | 6490 | 1.8 |
| Lignin-hemicellulose copolymer | 4128 | 6758 | 1.6 |
| Eucalyptus H₂O₂ 3.2% | Mn | Mw | Mw/Mn |
| APA lignin | 3964 | 9064 | 2.3 |
| Lignin-hemicellulose copolymer | 3364 | 6224 | 1.9 |
| Eucalyptus H₂O₂4.2% | Mn | Mw | Mw/Mn |
| APA lignin | 3709 | 9124 | 2.5 |
| Lignin-hemicellulose copolymer | 1865 | 4291 | 2.3 |

Table 4 shows the yield of each component of polymeric lignocellulose of various kinds of biomass in the two-stage microwave extraction reaction according to the M-APA method (wt%, raw-material biomass ratio).

**Table 4**

| | Hardwood | | Softwood | | Herbaceous plant | |
|---|---|---|---|---|---|---|
| Biomass species | Eucalyptus | Japanese beech | *Pinus densiflora* | Japanese cedar | Bagasse (Sugarcane) | Bamboo |
| APA lignin | 7 | 4 | 7 | 4 | 7 | 11 |
| Lignin-hemicellulose copolymer | 14 | 9 | 8 | 9 | 13 | 18 |
| Residual cellulose | 71 | 84 | 83 | 85 | 79 | 69 |
| Total yield | 92 | 97 | 98 | 97 | 99 | 98 |

Solvent: Acetic acid (containing 1% of peracetic acid in an amount of 0.14 mol/L)

Microwave Extraction Conditions: APA lignin soluble part was obtained at 50°C for 10 min (first stage), and a lignin-hemicellulose copolymer was obtained at 140°C for 10 min (second stage)

Table 5 shows the yield of each component of polymeric lignocellulose of various kinds of biomass in the one-stage microwave extraction reaction according to the A-APA method (wt%, raw-material biomass ratio).

**Table 5**

| | Hardwood | | Softwood | | | Herbaceous plant | |
|---|---|---|---|---|---|---|---|
| Raw material biomass plant species | Eucalyptus | Japanese beech | *Pinus densiflora* | Japanese cedar | Cypress | Bagasse (Sugarcane) | Bamboo |
| Weakly alkaline soluble lignin | 22 | 22 | 25 | 19 | 18 | 35 | 32 |
| APA lignin + lignin-polysaccharide complex | 30 | 26 | 13 | 21 | 19 | 12 | 19 |
| Total soluble part | 52 | 48 | 39 | 40 | 37 | 47 | 51 |
| Residual cellulose | 54 | 55 | 63 | 65 | 68 | 51 | 55 |
| Total | 106 | 103 | 101 | 105 | 105 | 98 | 106 |

Table 6 shows the molecular weight of each component of polymeric lignocellulose of various kinds of biomass obtained according to the A-APA method (GPC analysis values of acetylated products).

**Table 6**

| | | | |
|---|---|---|---|
| Eucalyptus | Mn | Mw | Mw/Mn |
| Weakly alkaline soluble lignin | 1571 | 3006 | 1.9 |
| APA lignin | 2467 | 3645 | 1.5 |
| Lignin-hemicellulose copolymer | 2023 | 6438 | 3.2 |
| APA lignin + lignin-polysaccharide complex | 2116 | 7156 | 3.4 |
| Japanese beech | Mn | Mw | Mw/Mn |
| Weakly alkaline soluble lignin | 1254 | 3502 | 2.8 |
| APA lignin | 4977 | 8895 | 1.8 |
| Lignin-hemicellulose copolymer | 1935 | 4947 | 2.6 |
| APA lignin + lignin-polysaccharide complex | 1875 | 5115 | 2.7 |
| *Pinus densiflora* | Mn | Mw | Mw/Mn |
| Weakly alkaline soluble lignin | 1437 | 3768 | 2.6 |
| APA lignin | 1178 | 2361 | 2.0 |
| Lignin-hemicellulose copolymer | 2138 | 5544 | 2.6 |
| APA lignin + lignin-polysaccharide complex | 1879 | 4565 | 2.4 |
| Japanese cedar | Mn | Mw | Mw/Mn |
| Weakly alkaline soluble lignin | 1293 | 2876 | 2.2 |
| APA lignin | 974 | 1836 | 1.9 |
| Lignin-hemicellulose copolymer | 1992 | 4842 | 2.4 |
| APA lignin + lignin-polysaccharide complex | 2088 | 4579 | 2.2 |
| Cypress | Mn | Mw | Mw/Mn |
| Weakly alkaline soluble lignin | 1711 | 3519 | 2.1 |
| APA lignin | 985 | 1948 | 2.0 |
| Lignin-hemicellulose copolymer | 1981 | 4882 | 2.5 |
| APA lignin + lignin-polysaccharide complex | 2069 | 4671 | 2.3 |
| Bagasse (Sugarcane) | Mn | Mw | Mw/Mn |
| Weakly alkaline soluble lignin | 3150 | 6179 | 2.0 |
| APA lignin | 2168 | 3024 | 1.4 |
| Lignin-hemicellulose copolymer | 1785 | 3588 | 2.0 |
| APA lignin + lignin-polysaccharide complex | 1525 | 2949 | 1.9 |
| Bamboo | Mn | Mw | Mw/Mn |
| Weakly alkaline soluble lignin | 3035 | 6325 | 2.1 |
| APA lignin | 2437 | 3601 | 1.5 |
| Lignin-hemicellulose copolymer | 2119 | 4798 | 2.3 |
| APA lignin + lignin-polysaccharide complex | 1790 | 3718 | 2.1 |

The study of conditions found that when the starting material is wood-based biomass, the temperature suitable for contact with an organic acid and a peracid is 40 to 90°C for obtaining soluble lignin; and that the temperature suitable for contact with an organic acid and a peracid is 100 to 160°C for obtaining a lignin-hemicellulose copolymer. The study of conditions also found that when the starting material is herbaceous biomass, the temperature suitable for contact with an organic acid and a peracid is from room temperature to 60°C for obtaining soluble lignin; and that the temperature suitable for contact with an organic acid and a peracid is 70 to 150°C for obtaining a lignin-hemicellulose copolymer.

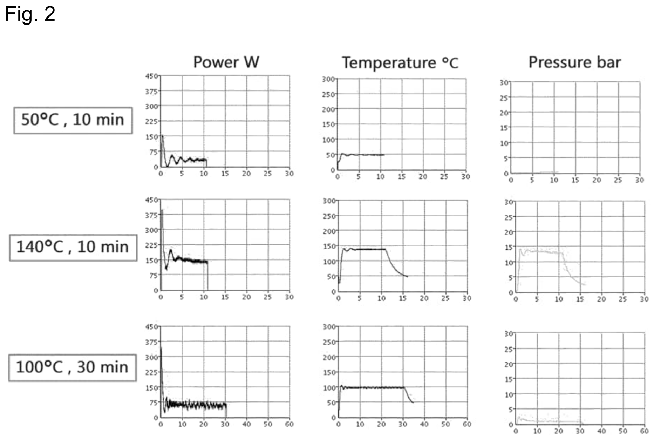

The study of conditions found that the heating time by microwave irradiation may be 5 to 30 minutes, preferably 10 minutes. The net irradiation time was short. See Fig. 2 for the microwave profile, and data on temperature and pressure.

The study of conditions also found that the microwave heating resulted in a higher yield and a higher selectivity at low temperature in a short time with a low energy input than the external heating method. More specifically, microwave effects such as local heating, internal heating, electron transfer, and a chemical-permeation-promoting effect were observed.

The study of conditions also found that acetic acid, formic acid, and glyoxylic acid (organic acids) were all able to isolate lignin, and that acetic acid was most suitable from the viewpoints of yield, purity, and industrial application.

Fig. 3 shows the results of NMR in Reference Test Examples 1-6-2 and 1-6-3. Fig. 3 shows the results of analysis of lignin isolated from eucalyptus (starting material) according to the M-APA method (microwave treatment at 50°C for 10 minutes with acetic acid-peracetic acid 1%). Quantification of the proportion of interunit bonds of lignocellulose according to the TAF-NMR method found that the signal derived from lignin was 99%, and that the signal derived from polysaccharides (hemicelluloses) was 1%. The breakdown of the interunit bonds of lignin was the following: 81% of ether-type β-O-4, 5% of β-5, 11% of β-β, 1% of dibenzodioxocin, and 1% for the remainder. See Fig. 4 for the partial chemical structures of the lignin interunit bonds and the covalent bonds of lignin-hemicellulose.

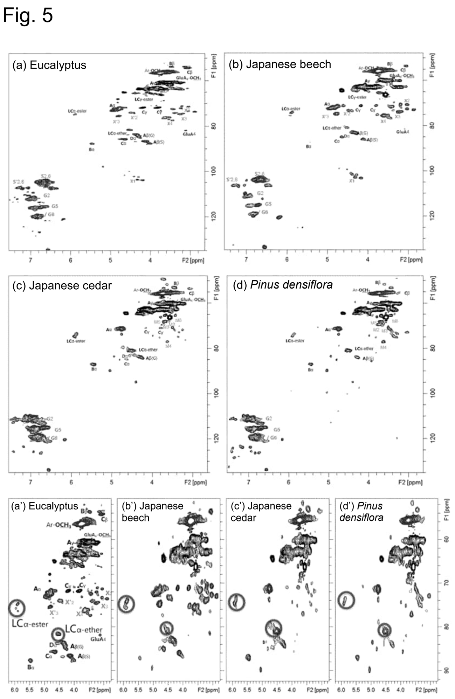

Fig. 5 shows the results of NMR in Reference Test Example 1-6-4. Fig. 5 shows the results of analysis of the lignin-hemicellulose copolymer isolated from individual plants (starting materials) according to the M-APA method (microwave treatment at 50°C for 10 minutes with acetic acid-peracetic acid 1%). The LC bonds (ether type and ester type) indicated by circles in the figure are a main branched structure present in a ratio equivalent to or higher than the abundance ratio of β-5 and β-β bonds, which are the main interunit bonds of lignin. The isolated lignin-hemicellulose copolymer is characterized in particular by the presence of an LCα-ester-type linkage.

### Reference Test Example 2. Solubility measurement

The lignin and the lignin-hemicellulose copolymer obtained according to the method of Reference Test Example 1 or a method similar thereto were measured for the solubility in 60 to 80% ethanol at 25°C. Table 7 shows the details of the measurement samples. The abbreviations in Table 7 are as listed below.
PA: Peracetic acid
HP: Hydrogen peroxide
50: MW50 ACTN, high-quality polymeric lignin treated with microwaves at 50°C
140: MW50-Mw140 ACTN, a lignin-hemicellulose copolymer obtained at the second stage of a 140°C treatment of the residue after microwave treatment at 50°C
A50: An acetic acid-peracetic acid system, HP PA1% AA Mw50 ACN, high-quality polymeric lignin treated with microwaves at 50°C H50: An acetic acid hydrogen peroxide system, HP 1 M hydrogen peroxide, Mw50 ACN, high-quality polymeric lignin treated with microwaves at 50°C

**Table 7**

| | | |
|---|---|---|
| EA50 | Eucalyptus chip | Acetic acid-peracetic acid system PA1%AA Mw50 ACTN |
| EA140 | Eucalyptus chip | Acetic acid-peracetic acid system PA1%AA Mw50-Mw140 ACTN |
| EH50 | Eucalyptus chip | Acetic acid-hydrogen peroxide system HP 1M hydrogen peroxide Mw50 ACTN |
| BH50 | Domestic Japanese beech sapwood | Acetic acid-hydrogen peroxide system HP 1 M hydrogen peroxide Mw50 ACTN |
| PH50 | Domestic *Pinus densiflora* sapwood | Acetic acid-hydrogen peroxide system HP 1 M hydrogen peroxide Mw50 ACTN |
| CH50 | Domestic Japanese cedar sapwood | Acetic acid-hydrogen peroxide system HP 1 M hydrogen peroxide Mw50 ACTN |
| CH140 | Domestic Japanese cedar sapwood | Acetic acid-peracetic acid system HP 1 M hydrogen peroxide Mw50-Mw140 ACTN |
| TA50 | Domestic bamboo: *Phyllostachys edulis* powder | Acetic acid-peracetic acid system PA 1% AA Mw50 ACTN |
| TA140 | Domestic bamboo: *Phyllostachys edulis* powder | Acetic acid-peracetic acid system PA 1% AA Mw50-Mw140 ACTN |
| HP50 | Domestic bamboo: *Phyllostachys edulis* powder | Acetic acid-hydrogen peroxide system HP 1M hydrogen peroxide Mw50 ACTN |

The measurement method for the solubility is as follows. A sample was stirred and dissolved in ethanol at 25°C, and the resulting product was separated into an ethanol-soluble part and ethanol-insoluble part by solid-liquid separation. An aqueous ethanol solution at 25°C (1/1 = ethanol/water) was added to the ethanol-insoluble part, and the mixture was stirred for dissolution to obtain an aqueous ethanol solution-soluble part. The aqueous ethanol solution-soluble part was mixed with the ethanol soluble part to obtain a sample solution. The amount of the aqueous ethanol solution added was adjusted so that the ethanol concentration of the sample solution was in the range of 60 to 80%. In the step of obtaining the soluble part, dispersion and solubilization were performed with an ultrasonic cleaner at 28 kHz for 3 min, as necessary. The maximum sample concentration at which the sample solution was visually transparent was defined as "solubility in 60 to 80% ethanol at 25°C."

Table 8 shows the results. The results indicate that the lignin and lignin-hemicellulose copolymers obtained by the method of the present invention exhibit good solubility in ethanol.

**Table 8**

| | Solubility |
|---|---|
| EA50 | 8 w/v% in 80% aqueous ethanol solution |
| EA140 | 8 w/v% in 80% aqueous ethanol solution |
| EH50 | 15 w/v% in 60% aqueous ethanol solution |
| BH50 | 20 w/v% in 60% aqueous ethanol solution |
| PH50 | 20 w/v% in 60% aqueous ethanol solution |
| CH50 | 8 w/v% in 70% aqueous ethanol solution |
| CH140 | 20 w/v% in 60% aqueous ethanol solution |
| TA50 | 8 w/v% in 80% aqueous ethanol solution |
| TA140 | 8 w/v% in 80% aqueous ethanol solution |
| HP50 | 15 w/v% in 60% aqueous ethanol solution |

### Test Example 1. Production of white lignin 1

White lignin was produced by treating a biomass with alkali, washing the resulting alkali-treated material with a liquid, and treating the washed material with an APA method. The specific procedure is described below.

The measurements were performed with the following. Analysis was performed using accompanying analysis software of the devices.

### UV-visible Absorption Spectrum: UV-2700 (available from Shimadzu Corporation)

A black quartz cell for spectrometry (optical path length: 10 mm) or a High Precision Cell, Art. No Light Path 10 × 10 mm was used. The lignin fine particle sample was diluted with 30 v/v% EtOHaq to a final concentration of lignin of 0.005 w/v%. Wavelength scanning (200 to 900 nm, 250 to 600 nm) was performed.

### Fluorescence Spectrum: Spectrofluorometer RF-6000 (available from Shimadzu Corporation)

Fluorescence Measurement: a fully transparent synthetic quartz cell (optical path length: 10 mm) and a Starna triangular quartz cell SF3 were used. The lignin fine particle sample was diluted with 30 v/v% EtOHaq to a final concentration of lignin of 0.005 w/v%.

3D fluorescence spectra were measured at an excitation wavelength of 240 to 650 nm, a data interval of 2 nm, a fluorescence wavelength of 240 to 650 nm, a data interval of 2 nm, and a scan speed of 6000 nm/min, with an ultraviolet cut filter U310 mounted on the excitation side in order to reduce the influence of scattered light and multidimensional light. The bandwidth was 10 nm on the excitation side, and 20 nm on the fluorescence side, with the sensitivity set to Low.

Fluorescence Microscope Measurement: An All-in-One Fluorescence Microscope BZ-X810 (available from Keyence Corporation) was used.

Particle size distribution (DLS) and zeta potential were measured with a DLS dynamic light scattering nanoparticle analyzer SZ-100 (Horiba, Ltd.). A sample was placed in a particle size measurement cell and a zeta potential measurement cell (Horiba, Ltd.), and measured. The measurements were each repeated 3 to 5 times, and average values were calculated.

The particle size distribution was measured by qNANO using a qNano Gold TRPS Measurement System (available from Meiwafosis Izon Science). The measurement was performed by attaching Nanopore NP200 or NP400 and adding 35 µL of a sample. The measurement was performed up to 500 to 1000 particle counts for 30 seconds or more.

The stretching of pores was set to 37.00 mm, and the measurement was conducted at a constant voltage of 2.0 V.

### Test Example 1-1. Preparation of wood flour

1 g of wood flour or wood chips (10 mm × 10 mm × 2 mm) of hardwood (eucalyptus), softwood (*Pinus densiflora,* Japanese cedar, or cypress), or a herbaceous plant (bagasse (sugarcane) or bamboo) was placed in each of the two pots on the left and right of a mixer mill (MM301, available from Retsch). Milling was performed under the conditions of a grinding time of 5 minutes and a frequency of 1/15 sec, thus obtaining a powder (wood flour) with a volume average particle size of 0.1 mm.

### Test Example 1-2. Alkali treatment, washing, APA method treatment Example 1

In a vessel, 14.4 mL of a 0.25 M aqueous sodium hydroxide solution was added to 1.8 g of the eucalyptus wood flour obtained in Test Example 1-1. The vessel was soaked in a hot water bath at 60°C and treatment was conducted for 1 hour. After the hot water bath treatment, a soluble part and an insoluble part were separated by spinning-down, and the insoluble part was washed with water. The washing with water was performed until the washing waste liquid became neutral. The washed material obtained (containing 6.5 mL of water) and an acetic acid-hydrogen peroxide-containing solution (14.1 mL of 99% acetic acid (17.1 M), 0.294 mL of 30% v/v hydrogen peroxide water) were placed in an Initiator vial, and irradiated with microwaves for 10 minutes at 50°C with an initial power of 400 W and at a stirring speed of 600 rpm using an Initiator + 60 microwave synthesizer available from Biotage. After the irradiation, 14.4 mL of separating solvent 1 (70% aqueous ethanol solution) was added and mixed. Then, the mixture was spun-down (RCF 10,000 × g, 5 min) and a soluble part (supernatant) was collected. The solvent in the soluble part was distilled off, 6 mL of separating solvent 2 (80% aqueous dioxane solution) was added to the dried material obtained, and mixed. Then, the mixture was spun-down (RCF 10,000 × g, 5 min) and a soluble part (supernatant) was collected. The soluble part was dried, thus obtaining 58 mg of white lignin powder.

### Example 2

113 mg of white lignin powder was obtained in the same manner as in Example 1 except that an ultrasonic treatment was performed in place of the hot water bath treatment in the alkali treatment. In the ultrasonic treatment, 14.4 mL of a 0.25 M sodium hydroxide solution was added to 1.8 g of the eucalyptus wood flour obtained in Test Example 1-1 in the vessel, and the mixture was irradiated with 28 kHz ultrasonic waves intermittently for 30 minutes using an ultrasonic irradiation device (available from AS ONE Corporation, product name: Ultrasonic Cleaner Model VS-100III). During this operation, the liquid temperature was 30 to 50°C.

### Example 3

47 mg of white lignin powder was obtained in the same manner as in Example 1 except that a 0.1 M aqueous sodium hydroxide solution was used in place of the 0.25 M aqueous sodium hydroxide solution in the alkali treatment and a microwave treatment was performed in place of the hot water bath treatment in the alkali treatment. In the microwave treatment, 14.4 mL of a 0.25 M sodium hydroxide solution was placed in an Initiator vial with respect to 1.8 g of the eucalyptus wood flour obtained in Test Example 1-1, and the mixture was irradiated with microwaves for 30 minutes at 40°C with an initial power of 400 W and at a stirring speed of 600 rpm using an Initiator + 60 microwave synthesizer available from Biotage.

### Example 4

29 mg of white lignin powder was obtained in the same manner as in Example 2 except that cypress wood flour (Test Example 1-1) was used in place of the eucalyptus wood flour.

### Example 5

56 mg of white lignin powder was obtained in the same manner as in Example 1 except that a 0.1 M aqueous sodium hydroxide solution was used in place of a 0.25 M aqueous sodium hydroxide solution in the alkali treatment, and a hot water bath treatment at 30°C for 30 minutes was performed in place of the hot water bath treatment at 60°C for 1 hour in the alkali treatment.

### Example 6

63 mg of white lignin powder was obtained in the same manner as in Example 1 except that a hot water bath treatment at 30°C for 30 minutes was performed in place of the hot water bath treatment at 60°C for 1 hour in the alkali treatment.

### Example 7

47 mg of white lignin powder was obtained in the same manner as in Example 2 except that a 0.1 M aqueous sodium hydroxide solution was used in place of the 0.25 M aqueous sodium hydroxide solution in the alkali treatment.

### Example 8

80 mg of white lignin powder was obtained in the same manner as in Example 3 except that a 0.25 M aqueous sodium hydroxide solution was used in place of the 0.1 M aqueous sodium hydroxide solution in the alkali treatment.

### Example 9

46 mg of white lignin powder was obtained in the same manner as in Example 2 except that an acetic acid stock solution (17.5 M) was used in place of the acetic acid-hydrogen peroxide-containing solution in the APA method treatment.

### Example 10

53 mg of white lignin powder was obtained in the same manner as in Example 2 except that the washed material (containing 6.5 mL of water) obtained after the alkali treatment in the APA method treatment and an acetic acid-hydrogen peroxide-containing solution (14.1 mL of 99% acetic acid (17.1 M), 0.029 mL of 30% v/v hydrogen peroxide water) were used (final concentration: acetic acid/hydrogen peroxide/water = 68%/0.048%/31.6%).

### Example 11

37 mg of white lignin powder was obtained in the same manner as in Example 1 except that a hot water bath treatment at 30°C for 10 minutes was performed in place of the hot water bath treatment at 60°C for 1 hour in the alkali treatment.

### Example 12

When the soluble part and the insoluble part were separated in the alkali treatment and the APA treatment, suction filtration was used in place of spin-down. 24 mg of white lignin powder was obtained in the same manner as in Example 2 except that the washed material (containing 1.9 mL of water) obtained after the alkali treatment and an acetic acid-hydrogen peroxide-containing solution (14.1 mL of 99% acetic acid (17.1 M), 0.29 mL of 30% v/v hydrogen peroxide water) were used (final concentration: acetic acid/hydrogen peroxide/water = 86.5%/0.613%/12.8%).

In the ultrasonic treatment in the alkali treatment, 28 kHz ultrasonic waves were applied intermittently for 30 minutes using an ultrasonic cleaner MCD-10P available from AS ONE Corporation in place of Ultrasonic Cleaner Model VS-100III available from AS ONE Corporation. During this operation, the liquid temperature was 30 to 50°C.

### Example 13

51 mg of white lignin powder was obtained in the same manner as in Example 12 except that acetone was used in place of the 70% aqueous ethanol solution as the separating solvent 1 in the alkali treatment and the APA treatment.

### Example 14

52 mg of white lignin powder was obtained in the same manner as in Example 12 except that Wiley-milled (sawdust-like) eucalyptus wood flour was prepared at a scale of 1.8 g in place of the eucalyptus wood flour obtained in Test Example 1-1.

### Example 15

76 mg of white lignin powder was obtained in the same manner as in Example 14 except that 2.0 g of Wiley-milled (sawdust-like) Japanese cedar wood flour was used in place of the eucalyptus wood flour obtained in Test Example 1-1.

### Example 16

22 mg of white lignin powder was obtained in the same manner as in Example 12 except that after the microwave irradiation in the APA treatment, only the acetic acid-hydrogen peroxide-containing solution was collected, neutralized by a dialysis method, desalted, and then lyophilized.

### Example 17

51 mg of white lignin powder was obtained in the same manner as in Example 12 except that the APA treatment was performed with the extraction vessel purged with nitrogen. As compared with Example 12, the whiteness (improved from 77.6 to 81.9) and the yield were improved with the same sample under the same conditions.

### Example 18

65.5 mg of white lignin powder was obtained in the same manner as in Example 12 except that Wiley-milled (sawdust-like) Japanese beech wood flour was prepared at a scale of 2.0 g in place of the eucalyptus wood flour obtained in Test Example 1-1.

### Example 19

87.7 mg of white lignin powder was obtained in the same manner as in Example 12 except that Wiley-milled (sawdust-like) cypress wood flour was prepared at a scale of 2.0 g in place of the eucalyptus wood flour obtained in Test Example 1-1.

### Example 20

56.3 mg of white lignin powder was obtained in the same manner as in Example 12 except that Wiley-milled (sawdust-like) *Pinus densiflora* wood flour was prepared at a scale of 2.0 g in place of the eucalyptus wood flour obtained in Test Example 1-1.

### Example 21

67.9 mg of white lignin powder was obtained in the same manner as in Example 12 except that *Phyllostachys edulis* powder (produced in Fukuoka prefecture, Kyushu, triennial) was prepared at a scale of 2.0 g in place of the eucalyptus wood flour obtained in Test Example 1-1.

### Example 22

51.4 mg of white lignin powder was obtained in the same manner as in Example 12 except that Wiley-milled (sawdust-like) rice straw powder was prepared at a scale of 2.0 g in place of the eucalyptus wood flour obtained in Test Example 1-1.

### Example 23

45.8 mg of white lignin powder was obtained in the same manner as in Example 12 except that Wiley-milled (sawdust-like) bagasse powder was prepared at a scale of 2.0 g in place of the eucalyptus wood flour obtained in Test Example 1-1.

### Example 24

51.1 mg of white lignin powder was obtained in the same manner as in Example 20 except that in the APA method treatment, a hot water bath treatment was employed in place of the microwave treatment, and a heat treatment for 15 minutes was performed in place of the heat treatment for 10 minutes.

### Example 25

64.9 mg of white lignin powder was obtained in the same manner as in Example 24 except that Wiley-milled eucalyptus wood flour was used in place of the Wiley-milled (sawdust-like) *Pinus densiflora* wood flour.

### Example 26

42.18 mg of white lignin powder was obtained in the same manner as in Example 25 except that the eucalyptus wood flour obtained in Test Example 1-1 was prepared at a scale of 1.8 g, and in the APA method treatment, after the sample was sealed in an Initiator vial, air was introduced with a syringe from the septum on the upper part of the vial, and the pressure in the vessel after the sealing was adjusted to 2.25 bar.

In addition, the APA-treated wood flour was placed in an Initiator vial together with the acetic acid-hydrogen peroxide-containing solution described in Example 1, and the mixture was heated for 10 minutes with a hot stirrer equipped with a heat block preheated to 140°C. Extraction operation was performed in the same manner as in Example 1, thus obtaining 220.7 mg of white LCC powder.

### Example 27

1224.9 mg of white lignin powder was obtained in the same manner as in Example 24 except that a hot water bath treatment at 23.3 to 26.3°C for 10 minutes was performed in place of the ultrasonic treatment at 30 to 50°C for 30 minutes in the alkali treatment, the preparation was performed at a scale of 50 g of Wiley-milled cypress wood flour in place of the Wiley-milled (sawdust-like) *Pinus densiflora* wood flour, a 0.01 M aqueous sodium hydroxide solution was used in place of the 0.25 M aqueous sodium hydroxide solution in the alkali treatment, and an acetic acid stock solution (17.5 M) was used in place of the acetic acid-hydrogen peroxide-containing solution in the APA method treatment.

### Example 28

72.5 mg of white lignin powder was obtained in the same manner as in Example 12 except that Wiley-milled (sawdust-like) Japanese beech wood flour from which extracted components of the raw material had been removed by degreasing and depectin was prepared at a scale of 2.0 g in place of the eucalyptus wood flour obtained in Test Example 1-1.

### Example 29

2183.3 mg of white lignin powder was obtained in the same manner as in Example 24 except that Wiley-milled eucalyptus wood flour was prepared at a scale of 100 g in a glass vessel in place of the Wiley-milled (sawdust-like) *Pinus densiflora* wood flour, a hot water bath treatment was employed in place of the microwave treatment in the APA method treatment, a hot water bath treatment for 60 minutes was performed in place of the hot water bath treatment for 15 minutes, and squeezing was used for separating the treatment solution from the wood flour.

### Example 30

2092.6 mg of white lignin powder was obtained in the same manner as in Example 27 except that *Phyllostachys edulis* powder (produced in Fukuoka prefecture, Kyushu, triennial) was prepared at a scale of 100 g in a glass vessel in place of the Wiley-milled (sawdust-like) *Pinus densiflora* wood flour, and spin-down was used for separating the treatment solution from the wood flour.

### Test Example 1-3. Measurement of whiteness

L*, a*, and b* of the white lignin powders obtained in Examples 1 to 17 were measured using a spectrophotometer (CM-R5 available from Konica Minolta, Inc.). In addition, L*, a*, and b* of the white lignin powders obtained in Examples 6 to 17 were measured using a spectrophotometer (Spectro 1, available from Variable Inc.). On the basis of the measured values, Hunter's whiteness (W) was calculated by the following formula: W = 100 - sqr [(100 - L*)^2 + ((a*)^2 + (b*)^2)]. Table 9 shows the results.

**Table 9**

| | L* | a* | b* | W (Hunter's whiteness) |
|---|---|---|---|---|
| Example 1 | 81.3 | 0.8 | 18.4 | 73.8 |
| Example 2 | 93.3 | -1.4 | 13.2 | 85.1 |
| Example 3 | 94.2 | -1.7 | 12.7 | 86.0 |
| Example 4 | 89.3 | 0.6 | 11.8 | 84.0 |
| Example 5 | 79.8 | -1.9 | 12.9 | 75.9 |
| Example 6 | 94.3 | -1.5 | 13.3 | 85.4 |
| Example 7 | 83.9 | -1.0 | 14.0 | 78.7 |
| Example 8 | 83.6 | -2.0 | 8.5 | 81.4 |
| Example 9 | 84.0 | 3.1 | 8.1 | 81.8 |
| Example 10 | 85.8 | 2.8 | 10.8 | 81.9 |
| Example 11 | 81.3 | -0.4 | 9.2 | 79.2 |
| Example 12 | 78.4 | -1.3 | 5.6 | 77.6 |
| Example 13 | 79.9 | -0.1 | 8.5 | 78.2 |
| Example 14 | 87.9 | -1.4 | 5.1 | 86.8 |
| Example 15 | 84.1 | 2.8 | 17.3 | 76.3 |
| Example 16 | 71.6 | 4.6 | 6.6 | 70.5 |
| Example 17 | 85.3 | -1.2 | 10.5 | 81.9 |
| Example 18 | 93.3 | 0.1 | 10.8 | 87.3 |
| Example 19 | 87.6 | 3.4 | 14.9 | 80.3 |
| Example 20 | 91.5 | 1.2 | 8.2 | 88.1 |
| Example 21 | 90.0 | -2.4 | 14.7 | 82.1 |
| Example 22 | 88.9 | -0.9 | 19.2 | 77.8 |
| Example 23 | 90.6 | -0.6 | 16.1 | 81.3 |
| Example 24 | 93.6 | 0.6 | 7.5 | 90.1 |
| Example 25 | 93.7 | -0.5 | 8.7 | 89.2 |
| Example 26 - Lignin | 91.2 | -1.0 | 5.3 | 89.7 |
| Example 26 - LCC | 78.7 | 8.9 | 19.1 | 70.0 |
| Example 27 | 56.0 | 5.1 | 13.0 | 53.8 |
| Example 28 | 91.8 | 0.8 | 12.3 | 85.2 |
| Example 29 | 89.6 | -0.6 | 9.2 | 86.1 |
| Example 30 | 69.2 | 0.0 | 24.4 | 60.7 |
| Example 31 - Lignin | 79.7 | 2.2 | 6.5 | 78.6 |
| Example 31 - LCC | 77.4 | 7.5 | 14.0 | 72.4 |
| Example 32 | 80.4 | 8.0 | 19.5 | 71.2 |
| Example 33 | 80.4 | 3.1 | 11.4 | 77.1 |
| Example 34 - Lignin | 83.9 | 3.8 | 10.8 | 80.2 |
| Example 34 - LCC | 83.3 | 3.7 | 12.3 | 78.9 |
| Commercially available lignin (Tokyo Chemical Industry Co., Ltd.) | 21.3 | 5.2 | 6.3 | 20.9 |
| Commercially available lignin (Nacalai Tesque, Inc.) | 15.9 | 3.6 | 4.2 | 15.7 |

In addition, since the white lignin obtained in each Example was obtained by a method to which the Reference Test Examples 1 and 2 were applied, the white lignin has physical properties similar to those of the lignins obtained in Reference Test Examples 1 and 2 except for the color, although there is some difference in solubility.

### Test Example 1-4. Measurement of lignin oxidation type ratio and content of structure containing β-O-4 ether bonds

For the white lignin powders of Examples, the content of the structure containing β-O-4 ether bonds was measured in accordance with the method described in Reference Test Examples. In addition, the lignin oxidation type ratio (ratio of oxidized lignin structures) was measured in accordance with the method described in "Method for calculating oxidized lignin ratio" in section "2. White lignin." Table 10 shows the results together with the measurement result of the whiteness W (Test Example 1-3).

**Table 10**

| | Lignin oxidation type ratio | | Ether type content (%) | W (Hunter's whiteness) |
|---|---|---|---|---|
| | (G'/G) | (S'/S) | | |
| Example 2 | 0.10 | 0.10 | 59.4 | 85.1 |
| Example 3 | 0.10 | 0.11 | 69.8 | 86.0 |
| Example 6 | 0.04 | 0.04 | 65.9 | 85.4 |
| Example 8 | 0.13 | 0.14 | 64.1 | 81.4 |
| Example 9 | 0.08 | 0.11 | 62.3 | 81.8 |
| Example 10 | 0.04 | 0.18 | 75.1 | 81.9 |
| Example 13 | 0.17 | 0.23 | 55.1 | 78.2 |
| Example 14 | 0.08 | 0.19 | 59.1 | 86.8 |
| Example 12 | 0.00 | 0.07 | 70.0 | 77.6 |
| Example 18 | 0.13 | 0.07 | 95.0 | 87.3 |
| Example 20 | 0.01 | - | 65.2 | 88.1 |
| Example 34 - Lignin | 0.03 | - | 84.6 | 80.2 |
| Example 21 | 0.03 | 0.09 | 85.8 | 82.1 |
| Reference Example | 0.29 | 0.32 | 41.5 | ca. 60 |

*Reference Example (M-APA lignin): Lignin extract obtained by finely milling eucalyptus wood flour with a ball mill and treating the milled flour with microwaves at 100°C in an acetic acid solution containing 3% of peracetic acid for 10 minutes. The lignin is brown (the whiteness is about 60, as determined by a color comparison).

The ratio of oxidized of white lignin and ether-type linkage content (converted per 100 aromatic rings of lignin, and calculated from the ratio of the corresponding portion in the same 2D HSQC NMR spectrum).

### Test Example 1-5. Measurement of infrared absorption spectrum

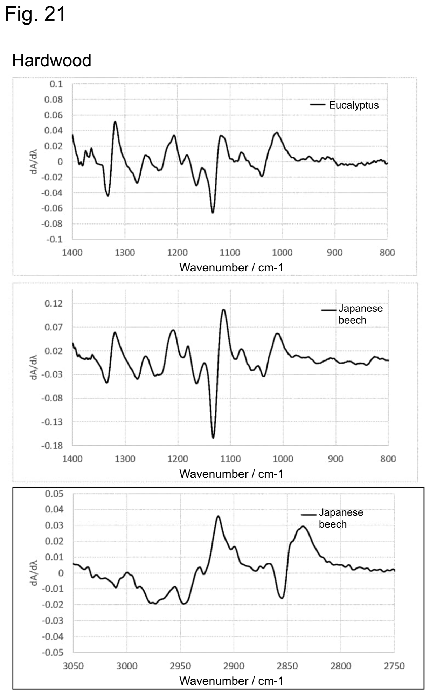

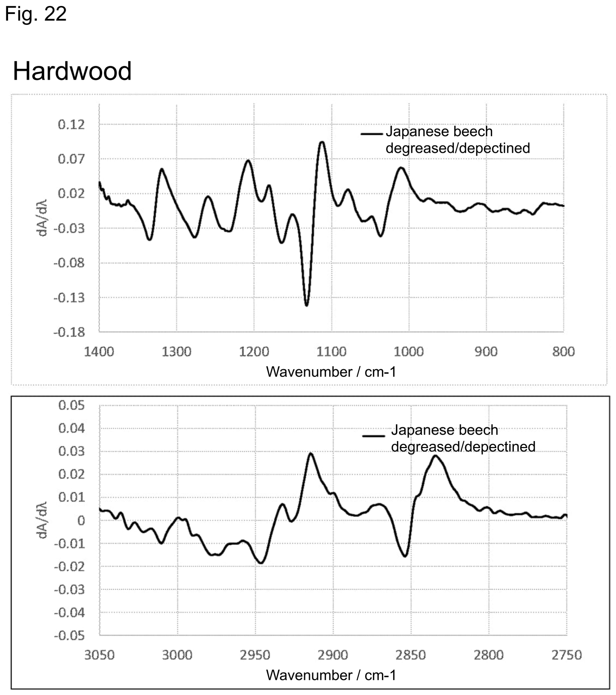

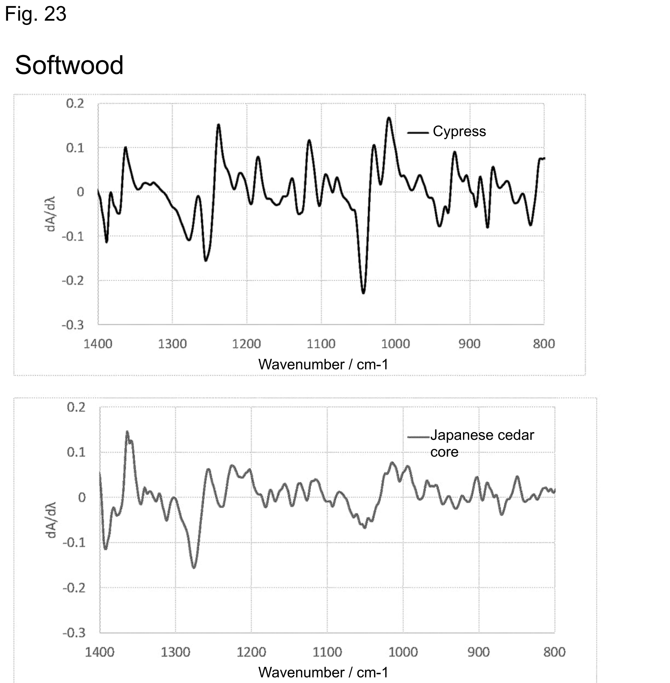

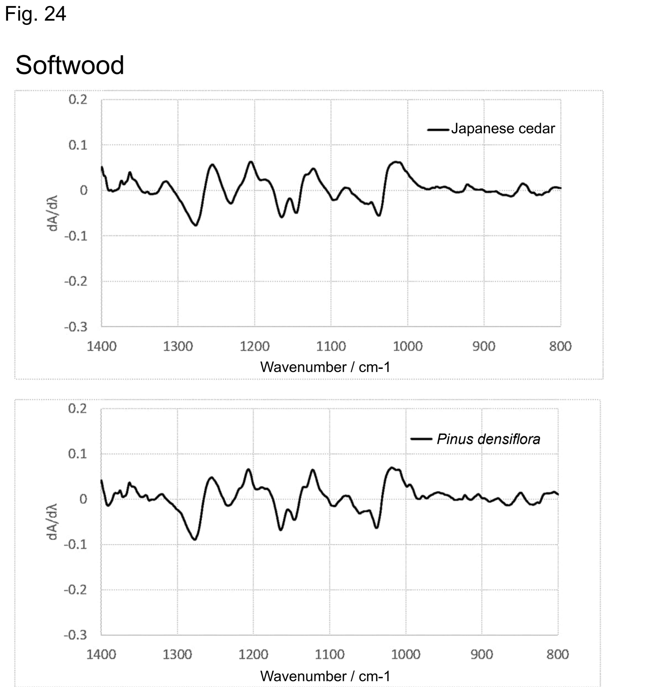

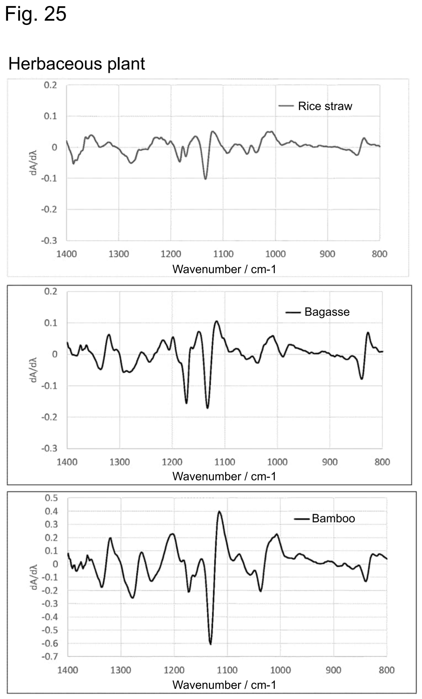

For FT-IR measurement of the white lignin powders of Examples, an FT-IR spectrometer Spectrum Two Diamond ATR available from PerkinElmer Inc. was used. The measurement range was 400 to 4000 cm⁻¹, and the number of scans was 10. The absorbance at 1800 cm⁻¹ was set to 0, the absorbance at 619 cm⁻¹ was set to 1 for normalization, and differentiation was further performed. Figs. 21 to 25 show the derivative spectra obtained.

### Test Example 2. Production of white lignin and white lignin-polysaccharide copolymer

White lignin and a white lignin-polysaccharide copolymer were produced by treating a biomass with alkali, washing the resulting alkali-treated material with a liquid, and treating the washed material by an APA method. The specific procedure is described below.

### Test Example 2-1: Preparation of finely milled wood flour

Hardwood (eucalyptus) and softwood (cypress) were obtained by powdering wood chips with a Wiley mill (Yoshida Mfg., Ltd., Model 1029-D). For eucalyptus, a Wiley-milled powder was further ground with a mixer mill. As bamboo, *Phyllostachys edulis* powder (produced in Fukuoka prefecture, Kyushu, triennial) was used.

### Test Example 2-2. Preparation of wood flour

1 g of wood flour of hardwood (eucalyptus) was placed in each of the two pots on the left and right of a mixer mill (MM301 available from Retsch). Milling was performed under the conditions of a grinding time of 5 minutes and a frequency of 1/15 sec, thus obtaining a powder (wood flour) with a volume average particle size of 0.1 mm.

### Test Example 2-3. Extraction of white lignin

As a starting material, the wood flour obtained in Test Example 2-1 or 2-2 was used. A 0.25 M sodium hydroxide solution was prepared (1 M was diluted 4 times). 14.4 mL of the 0.25 M sodium hydroxide solution was added to 1.8 g of wood flour, and the mixture was irradiated with ultrasonic waves using an ultrasonic cleaner (MCD-10P, available from AS ONE Corporation). The frequency was 28 kHz, and the irradiation time was 30 minutes. During the irradiation, the water in the cleaning tank was cooled with an immersion cooler (ECS-0 available from Tokyo Rikakikai Co., Ltd.) in order to control increase in water temperature.

After the ultrasonic treatment, the solution and the wood flour were separated by filtration, and the wood flour was washed with pure water. The wood flour washed with water and 14.4 mL of acetic acid (special grade, available from FUJIFILM Wako Pure Chemical Corporation) or an acetic acid-hydrogen peroxide water mixed solution (available from Santoku Chemical Industries Co., Ltd., 31% hydrogen peroxide water (specific gravity: 1.11): 0.294 mL = 0.612% = 0.2 M, acetic acid: 14.106 mL) were placed in an Initiator vial, and irradiated with microwaves for 10 minutes at 50°C with an initial power of 400 W and at a stirring speed of 600 to 900 rpm using an Initiator EXP microwave synthesizer available from Biotage. After the microwave treatment, the wood flour and the solution were separated by filtration, and the wood flour was washed three times with 14.4 mL of a 70% (v/v) aqueous ethanol solution. The filtered solution and the washings were combined, and the solvent was removed with a rotary evaporator. When an acetic acid odor was emitted from the resulting dried solid, a 70% (v/v) aqueous ethanol solution was added thereto, washing was performed, and the solvent was evaporated with an evaporator to dryness. The dried solid thus obtained is defined as "white lignin." As necessary, the dried solid was dissolved in an 80% (v/v) aqueous dioxane solution (dioxane, available from FUJIFILM Wako Pure Chemical Corporation), and the solution was frozen and then lyophilized.

In this test example, the atmosphere was normal pressure unless otherwise specified, and when it is described as pressurized, the sample was sealed in an Initiator vial, and then air was introduced with a syringe from the septum on the upper part of the vial. The pressure in the vessel after sealing was 2.25 bar.

In the case of heating and stirring instead of the microwave treatment described above, the heating was performed with a hot stirrer. The Initiator vial containing a sample was placed on a heat block, and the heat block was heated with the hot stirrer to achieve a required extraction temperature.

### Test Example 2-4. Extraction of white lignin-polysaccharide copolymer (LCC)

The wood flour after the acetic acid solution treatment of Test Example 2-3 was collected, and 14.4 mL of acetic acid (special grade, available from FUJIFILM Wako Pure Chemical Corporation) or an acetic acid-hydrogen peroxide water mixed solution (available from Santoku Chemical Industries Co., Ltd., 31% hydrogen peroxide water: 0.1294 mL, acetic acid: 14.106 mL) was placed in an Initiator vial, and irradiated with microwaves for 1 minute or 10 minutes at 120 to 140°C with an initial power of 400 W and at a stirring speed of 600 to 900 rpm using an Initiator EXP microwave synthesizer available from Biotage. The soluble part is subjected to a microwave treatment. Then, the wood flour and the solution are separated by filtration, and the wood flour is washed three times with 14.4 mL of a 70% (v/v) aqueous ethanol solution. The filtered solution and the washings were combined, and the solvent was removed with a rotary evaporator. When an acetic acid odor was emitted from the resulting dried solid, a 70% (v/v) aqueous ethanol solution was added thereto, washing was performed, and the solvent was evaporated with an evaporator to dryness. The dried solid thus obtained is defined as "white LCC." As necessary, the dried solid was dissolved in an 80% (v/v) aqueous dioxane solution, and the solution was frozen in liquid nitrogen and then lyophilized.

In this test example, the atmosphere was in the air unless otherwise specified, and when the atmosphere was described to be an argon atmosphere, the inside of the Initiator vial containing a sample was purged with argon gas before the microwave treatment, and then sealed.

In the case of heating and stirring instead of the microwave treatment described above, the heating was performed with a hot stirrer. The Initiator vial containing a sample was placed on a heat block, and the heat block was heated with the hot stirrer to achieve a required extraction temperature.

Table 9 shows the whiteness of the white lignin (Test Example 2-3) and the whiteness of the white lignin-polysaccharide copolymer (white LCC: Test Example 2-4). The measurement method is as in Test Example 1.

The ratio of oxidized white lignin and ether-type linkage content (converted per 100 aromatic rings of lignin, and calculated from the ratio of the corresponding portion in the same 2D HSQC NMR spectrum).

### Example 31

39.3 mg of white lignin powder was obtained in the same manner as in Example 9 except that filtration was employed for separation of the treatment solution from the wood flour.

In addition, 279.2 mg of white LCC powder was obtained in the same manner as in Example 26 except that an acetic acid stock solution (17.5 M) was used in place of the acetic acid-hydrogen peroxide-containing solution in the treatment at 140°C of the wood flour after the AAPA treatment.

### Example 32

51.3 mg of white lignin powder and 259.79 mg of white LCC powder were obtained in the same manner as in Example 31 except that in the APA treatment, an acetic acid-hydrogen peroxide-containing solution was used in place of the acetic acid stock solution (17.5 M), and a microwave treatment at 140°C for 1 minute was performed in place of the microwave treatment at 140°C for 10 minutes.

### Example 33

59.1 mg of white lignin powder and 49.9 mg of white LCC powder were obtained in the same manner as in Example 31 except that *Phyllostachys edulis* powder (produced in Fukuoka prefecture, Kyushu, triennial) was used in place of the Wiley-milled (sawdust-like) eucalyptus wood flour, and in the APA treatment, the atmosphere was replaced with argon gas and a microwave treatment at 120°C for 1 minute was performed in place of the microwave treatment at 140°C for 10 minutes.

### Example 34

67.7 mg of white lignin powder and 29.6 mg of white LCC powder were obtained in the same manner as in Example 31 except that cypress wood flour was used in place of the Wiley-milled (sawdust-like) eucalyptus wood flour, and in the APA treatment, the atmosphere was replaced with argon gas and a microwave treatment at 130°C for 1 minute was performed in place of the microwave treatment at 140°C for 10 minutes.

### Test Example 3. Production of self-assembled body (hollow spherical particles)

A white lignin sample was dissolved in DMSO to form a 10 w/v% DMSO solution, and water as a poor solvent was gradually added to prepare fine particles. Dispersion treatment by ultrasonic irradiation was performed for the dissolution. An NMR measurement sample was prepared using a solvent having DMSO-d₆:ethanol-d₆:D₂O being 1:1:8. In the experiments for incorporation of a drug, a dye, or the like, a compound to be incorporated was dissolved in DMSO or ethanol in advance, and the resulting solution was mixed with white lignin or white LCC, and then fine particles were prepared by the same method as described above. Table 11 shows the measurement results of the particle size etc.

**Table 11**

| | Raw material species of white lignin | Mode diameter (DLS) | Median diameter (DLS) | Mode diameter (qNano) | Median diameter (qNano) | ζ-Potential (mV) |
|---|---|---|---|---|---|---|
| Example 15 | Japanese cedar | 66 | 66 | | | -85 |
| Example 20 | *Pinus densiflora* | 116 | 112 | | | -62 |
| Example 27 | Cypress | 206 | 206 | 273 | 306 | |
| Example 18 | Japanese beech | 44 | 44 | | | -90 |
| Example 28 | Japanese beech (*1) | 54 | 53 | | | -76 |
| Example 29 | Eucalyptus | 139 | 135 | | | |
| Example 31 - Lignin | Eucalyptus (external heating process) | | | 229 | 266 | |
| Example 26 - Lignin | Eucalyptus LCC | 312 | 301 | 277 | 300 | |
| Example 22 | Rice straw | 90 | 90 | | | -91 |
| Example 23 | Bagasse | 73 | 73 | | | -99 |
| Example 30 | Bamboo | 248 | 248 | 266 | 288 | |
| *1 Prepared from a sample from which extraction components of a raw material have been removed. | | | | | | |

### Test Example 4. Solubility measurement

An NMR-DMSO-based solubility index was calculated. A lignin sample is dissolved in DMSO-d6 at a concentration of 2 w/v%, quantitative ¹H NMR measurement is performed, and then normalization is performed where the integrated value (6 to 8 ppm) of the NMR spectrum aromatic region is 100. Dissolution and measurement were performed under the same conditions. The integrated values of the spectra of the sample dissolved in deuterated acetic acid and deuterated ethanol were normalized on the basis of the deuterated DMSO condition, and the indexes were calculated. The measurement temperature was 313 K for the deuterated DMSO solvent and 298 K for the others.

White lignin (derived from bamboo) had an index of 115 in deuterated acetic acid and an index of 68 in deuterated ethanol.
White lignin (derived from eucalyptus) had an index of 104 in deuterated acetic acid and an index of 60 or higher in deuterated ethanol.

In contrast, eucalyptus MWL (milled lignin) had an index of 27 in deuterated acetic acid and an index of 20 or less in deuterated ethanol.

Japanese cedar MWL (milled lignin) had an index of 41 in deuterated acetic acid and an index of 25 or less in deuterated ethanol.

### Test Example 5. Production of structured material 1

### 5-1. Production of white lignin-sodium acetate complex

5 mg of eucalyptus-derived white lignin was dissolved in 500 µL or 1000 µL of acetic acid (special grade, available from FUJIFILM Wako Pure Chemical Corporation). Further, 5 to 45 mg of sodium acetate (anhydrate, special grade, available from FUJIFILM Wako Pure Chemical Corporation) was added and the mixture was completely dissolved. The produced solution was lyophilized, thus obtaining a complex.

### 5-2. Production of white lignin-salt complex

Eucalyptus-derived white lignin was dissolved in dimethyl sulfoxide (DMSO). The concentration was 10 mg/mL. Meanwhile, an aqueous solution containing any of the following was prepared: glycine (biotechnology grade, available from Nacalai Tesque, Inc.); citric acid-hydrate (special grade, available from FUJIFILM Wako Pure Chemical Corporation, hereafter all citric acid-hydrates used were available from FUJIFILM Wako Pure Chemical Corporation); L(+)-tartaric acid; sodium chloride; zinc chloride; sodium acetate (anhydrous); sodium acetate trihydrate; and ammonium acetate. The concentration was 5 mg/mL. 400 µL of a lignin-dimethyl sulfoxide solution and 8 mL of an aqueous solution were mixed, and the resulting mixed solution was lyophilized, thus obtaining a complex.

### 5-3. Purification method for complex

The complex formed can be purified by washing with cooled acetone, ethanol, or the like (which does not dissolve the complex). 1 mL of cooled acetone was added to 10 mg of the complex, and the supernatant obtained by spinning down was collected. This operation was performed three times. Thus, a complex was obtained from which impurities attached to the surface or non-complexed lignin were removed.

### 5-4. Acquisition of infrared absorption spectrum

For FT-IR measurement of the sample, an FT-IR spectrometer Spectrum Two Diamond ATR available from PerkinElmer Inc. was used. The measurement range was 400 to 4000 cm⁻¹, and the number of scans was 10. The spectrum was ATR-corrected, normalized by setting the absorbance at the wavenumber giving the maximum absorbance in the range of 4000 to 400 cm⁻¹ to 1, and further differentiated.

### 5-5. Results

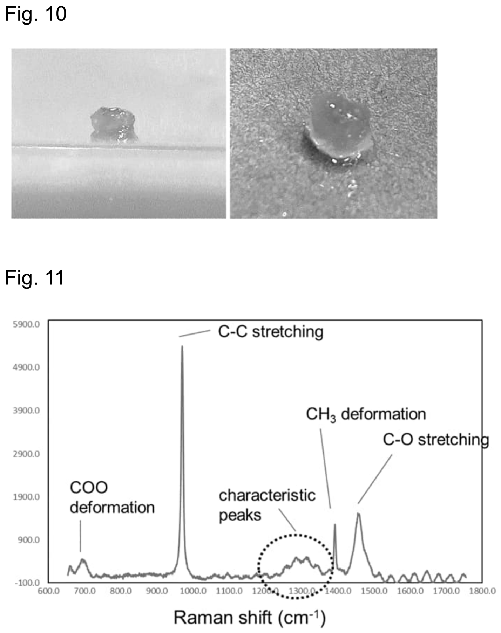

When glycine, sodium chloride, sodium acetate (anhydrous), and sodium acetate trihydrate were used, a solid (power form) was obtained after lyophilization. In contrast, when citric acid-hydrate, L(+)-tartaric acid, and zinc chloride were used, a product in the form of a gel was obtained after lyophilization (Fig. 10).

Gelation-inducing substances (citric acid-hydrate, L(+)-tartaric acid, and zinc chloride) are highly soluble in DMSO (zinc chloride is rather insoluble and forms a suspension). Non-gelation-inducing substances are poorly soluble in DMSO (these substances deposit as a precipitate).

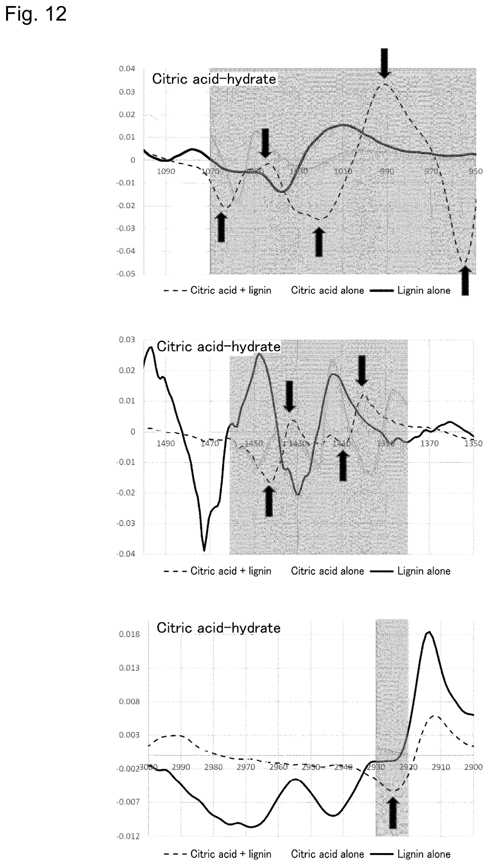

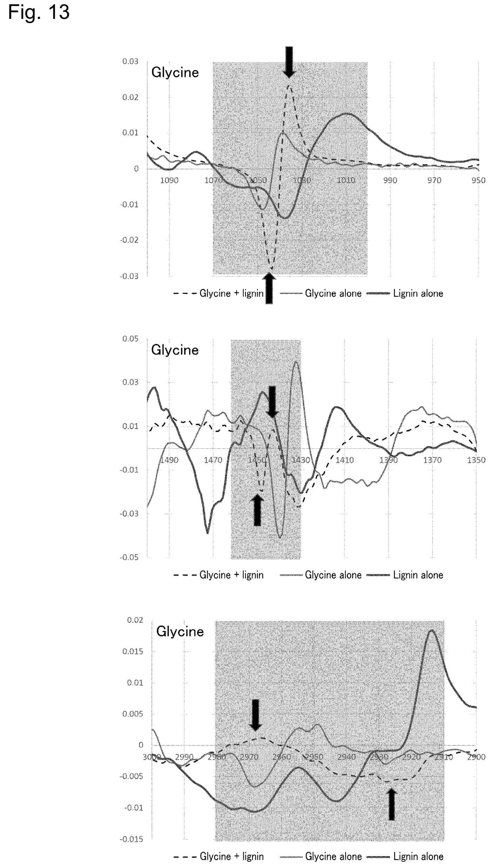

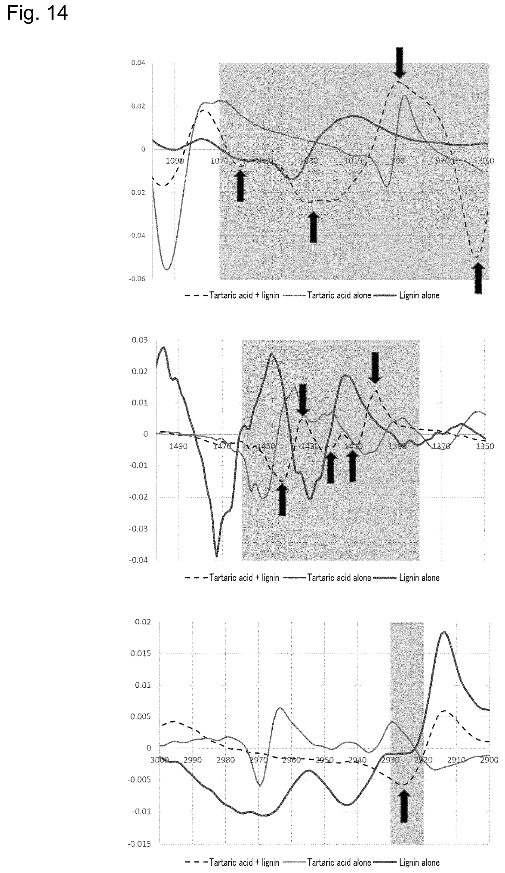

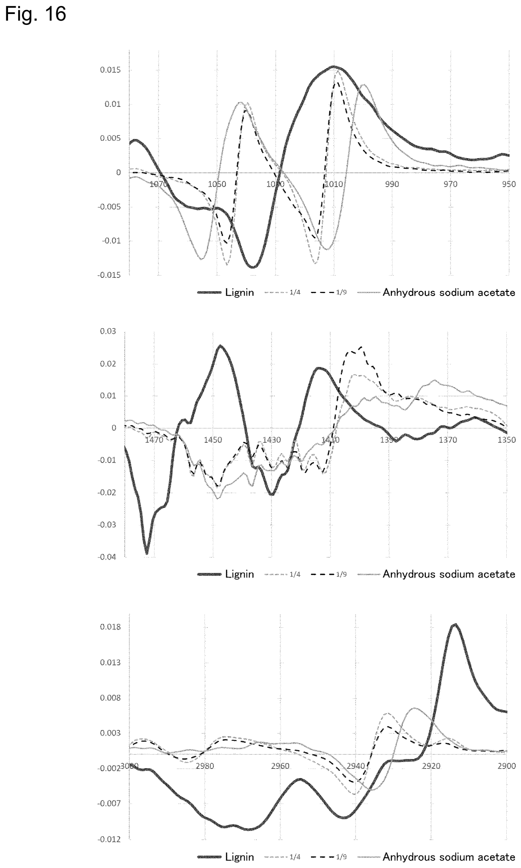

In the derivative form (first derivative spectrum) of the infrared absorption spectrum of the white lignin-sodium acetate complex, new peaks not observed for white lignin alone or sodium acetate alone were obtained, confirming the formation of a complex structure (Fig. 12 to Fig. 16 show examples). Regardless of the wood species or the organic acids and salts forming the complex, new peaks were commonly observed in the following wavenumber ranges:
1080 to 950 cm⁻¹,
1480 to 1350 cm⁻¹, and
3000 to 2900 cm⁻¹.

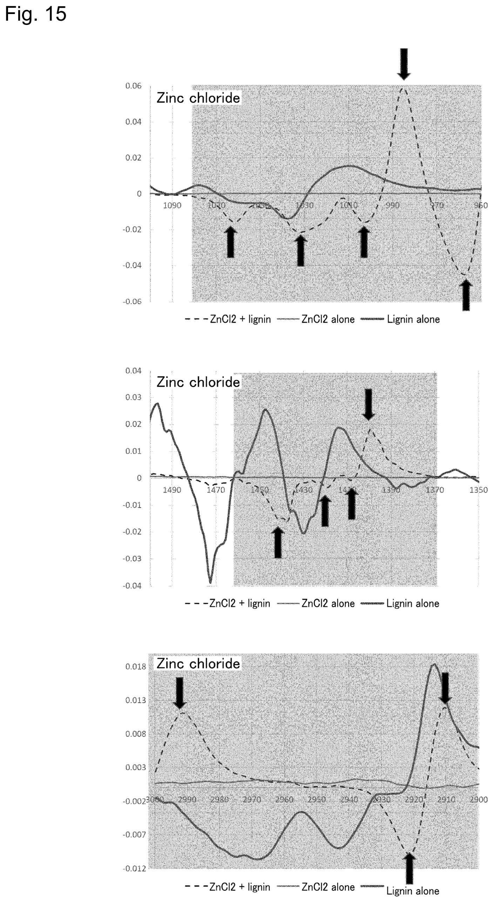

In the middle graph in Fig. 15, the spectrum attributable to the state of zinc chloride disappears in the complex. In this Example, the complex is formed at a lignin:zinc chloride weight ratio of 2:1. This indicates the ability of the lignin of the present invention to highly efficiently coordinate with and absorb metal ions.

### 5-6. Absorbance measurement

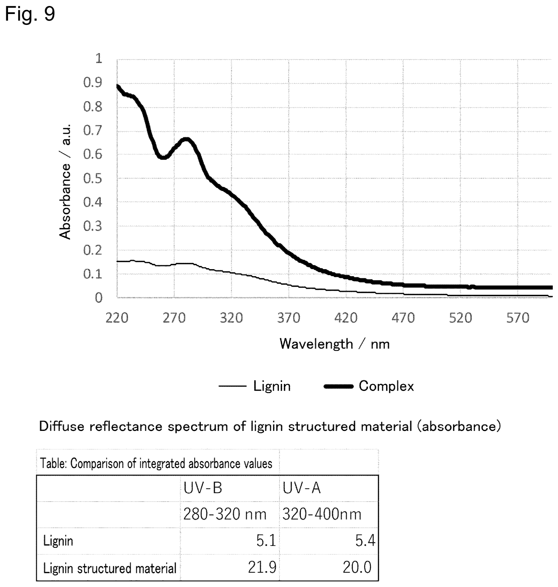

The absorbance of the white lignin-sodium acetate complex of Test Example 5-1 was measured by a diffuse reflectance method using a spectrophotometer (UV-2700, available from Shimadzu Corporation) and an integrating sphere unit (ISR-2600, available from Shimadzu Corporation). A dedicated holder was filled with a powdery sample for measurement. The baseline was acquired with barium sulfate (Nacalai Tesque, Inc.) and the scan speed was set to be medium. Fig. 9 shows a reflection spectrum obtained. The spectrum is normalized by the weight of lignin. Compared to lignin alone, the complex showed a significant increase in absorption. The absorption increased 4.3-fold in the UV-B range (280 to 320 nm) and 3.7-fold in the UV-A range (320 to 400 nm).

### 5-7. Raman spectrum measurement

The Raman spectrum was measured using a Laser Raman Microscope RAMANtouch available from Nanophoton with an excitation wavelength of 785 nm, 10× objective lens, and 0.30 N.A. A sample (1 mg) was applied as a thin film to a glass slide, and Raman spectroscopy was performed. Fig. 11 shows the results. A group of characteristic peaks arising from the formation of the complex was detected in the wavenumber range (1200 to 1400 cm⁻¹) indicated by a dashed circle in the figure.

### Test Example 6. Production of structured material 2

### 6-1. Synthesis of oxidized lignin A

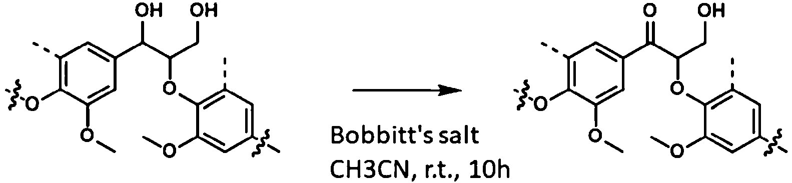

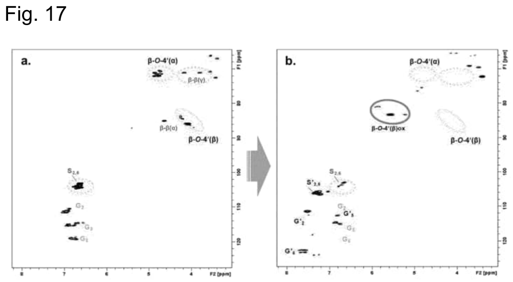

A white lignin sample (20 mg) was dissolved and dispersed in CH₃CN (3 mL), and 10 mg of Bobbitt's Salt (4-(acetylamino)-2,2,6,6-tetramethyl-1-oxo-piperidinium tetrafluoroborate, 745537 Sigma-Aldrich) was added thereto, followed by vigorous stirring at room temperature. After 10 hours (overnight), the sample was purified by solid-phase extraction (Waters Oasis HLB, 6 cc), thus obtaining oxidized lignin A. The 2D HSQC NMR confirmed that the target product was obtained (Fig. 17).

### 6-2. Synthesis of oxidized lignin B

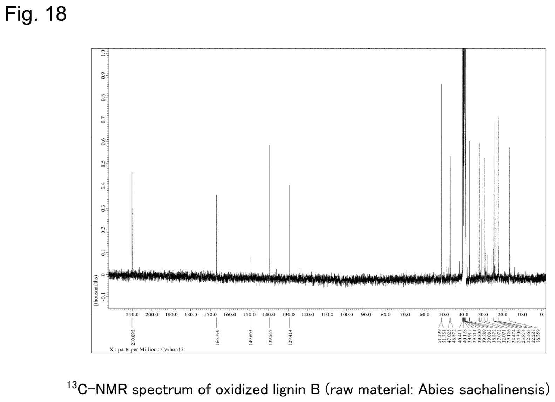

30 mg of MoO₂Cl₂(DMSO)₂ was added as a catalyst to a white lignin sample (383 mg) and the mixture was then dissolved in DMSO (8 mL). The solution was subjected to microwave heating treatment (160°C, 10 min), followed by adding ethyl acetate, washing with salt water and water in the stated order to remove DMSO, dried with sodium sulfate, and then concentrated, thus obtaining oxidized lignin B (391 mg). The 2D HSQC NMR and ¹³C-NMR confirmed that the target object was obtained (Fig. 18).

### 6-3. Reductive amination reaction of oxidized lignin B

495 mg of ammonium formate as an aminating agent, 1 99 µL of acetic acid as a reactant, and 5 mg of chloro[4-(dimethylamino)-N-(dimethylamino)pheny-2-pyridinecarboxamidato] (pentamethylcyclopentadienyl)iridium(III) (Ir-PA2) as a catalyst were added to the oxidized lignin B (235 mg), and the mixture was dissolved in methanol (2.5 mL), followed by reflux heating at 70°C for 3 hours under argon gas. The reaction solution was returned to room temperature, and a 1 M sodium hydroxide solution (2 mL) was added to terminate the reaction, followed by adding ethyl acetate to precipitate an insoluble fraction. The ethyl acetate-soluble fraction was treated as an unreacted material, and the precipitated insoluble fraction was treated as an aminated product. Both were washed twice with water to remove water-soluble components. The insoluble fraction was then collected. After ethyl acetate was added, the precipitate was obtained by simple centrifugation, thus obtaining aminated lignin (85 mg). The 2D HSQC NMR confirmed that the target product was obtained.

### 6-4. Synthesis of oxidized lignin C

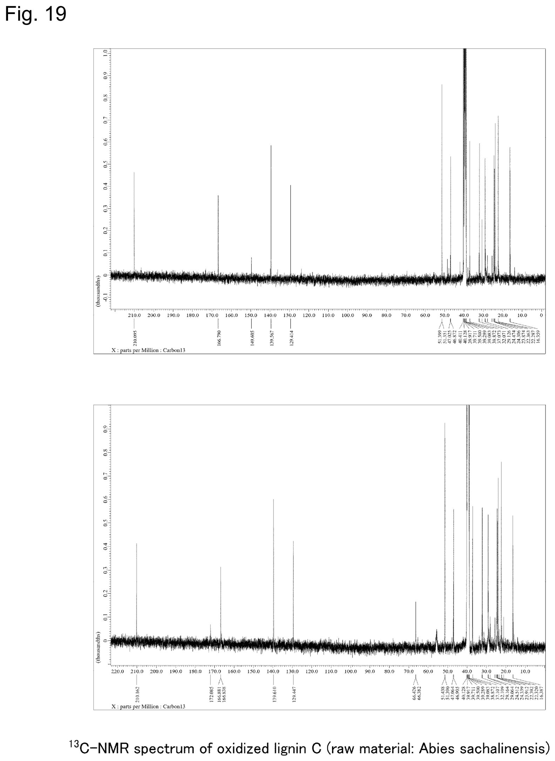

The white lignin sample (20 mg) was dissolved and dispersed in 0.7 mL of DMSO, and 1 mg of Palladium(II) Acetate (FUJIFILM Wako SG) was added, followed by vigorous stirring at 60°C. After 18 hours (overnight), the mixture was concentrated under nitrogen gas flow, and purified by solid-phase extraction (Waters Oasis HLB, 6 cc), thus obtaining oxidized lignin C. The ¹³C NMR and 2D HSQC NMR confirmed that the target product was obtained (Fig. 19).

### 6-5. Synthesis of halogenated lignin F1

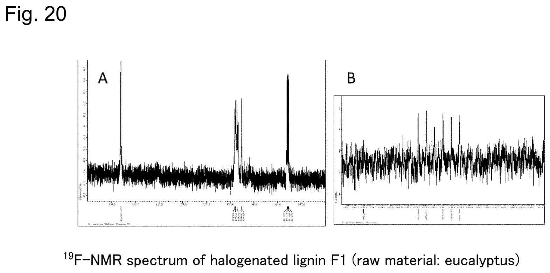

A white lignin sample (20 mg) was dissolved in 1 mL of 1,4 dioxane (dehydrated, 040-31651, available from FUJIFILM Wako), and 10 mg of PyFluor (pyridine-2-sulfonyl fluoride, B0440, available from Sigma-Aldrich) and 0.1 mL of N,N-diisopropylethylamine (DIPEA) (TCI, D1599) were added. The mixture was reacted under stirring at 80°C for 10 hours, concentrated under nitrogen gas flow, and purified by solid-phase extraction (Waters Oasis HLB, 6 cc), thus obtaining halogenated lignin F1. The 2D HSQC NMR and ¹⁹F NMR confirmed that the target product was obtained (Fig. 20).

### 6-6. Synthesis of halogenated lignin F2

The white lignin sample (20 mg) was dissolved in 1 mL of 1,4 dioxane (dehydrated, 040-31651, available from FUJIFILM Wako), and 10 mg of XtraFluor-M (719447, available from Sigma-Aldrich) and 0.1 mL of N,N-diisopropylethylamine (DIPEA) (TCI, D1599) were added. The mixture was reacted under stirring at 80°C for 10 hours, concentrated under nitrogen gas flow, and purified by solid-phase extraction (Waters Oasis HLB, 6 cc), thus obtaining halogenated lignin F2. The 2D HSQC NMR and ¹⁹F NMR confirmed that the target product was obtained.

### Test Example 7. Production of structured material 3

Using bamboo- or cypress-derived white lignin, a complex was produced and purified and infrared absorption spectra were obtained in the same manner as in Test Example 5.

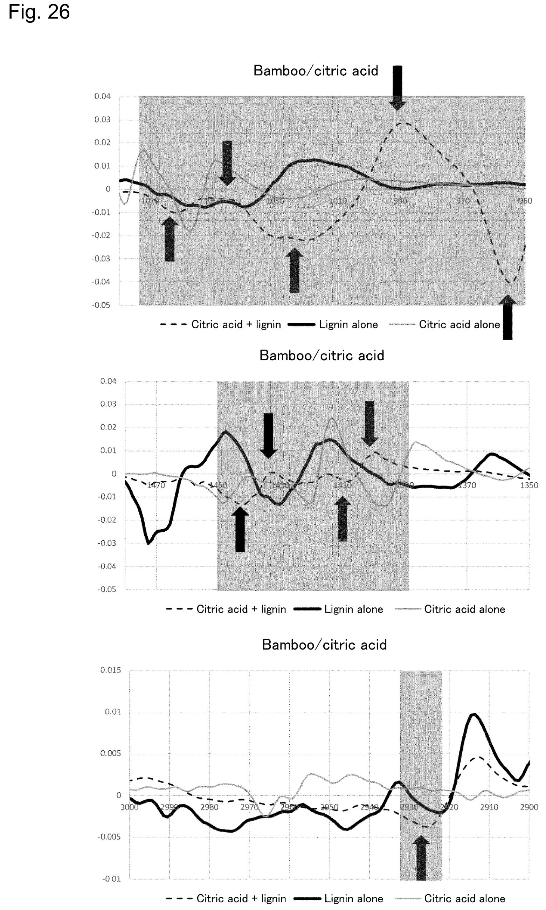

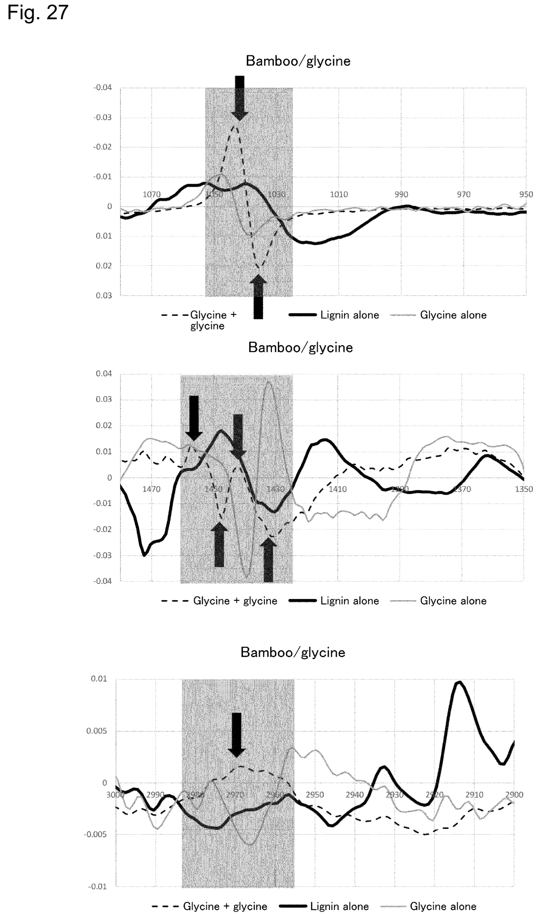

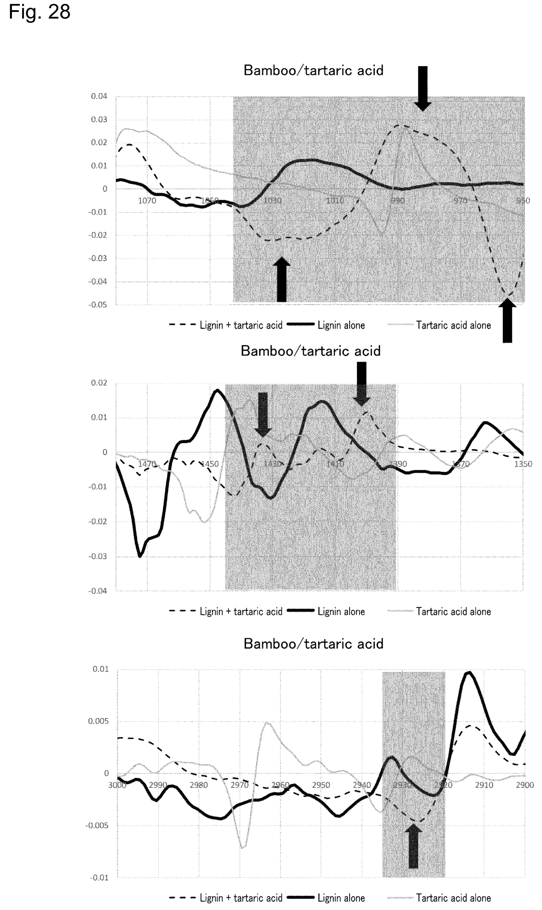

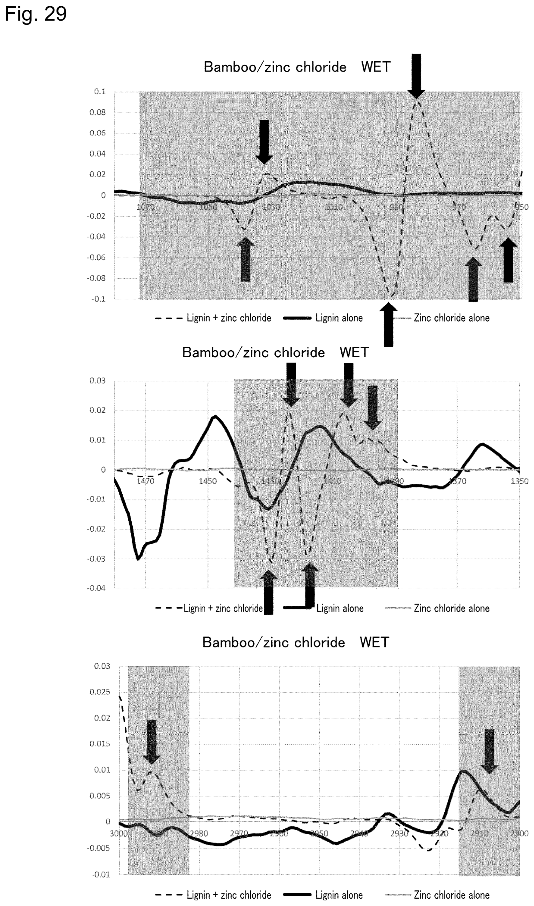

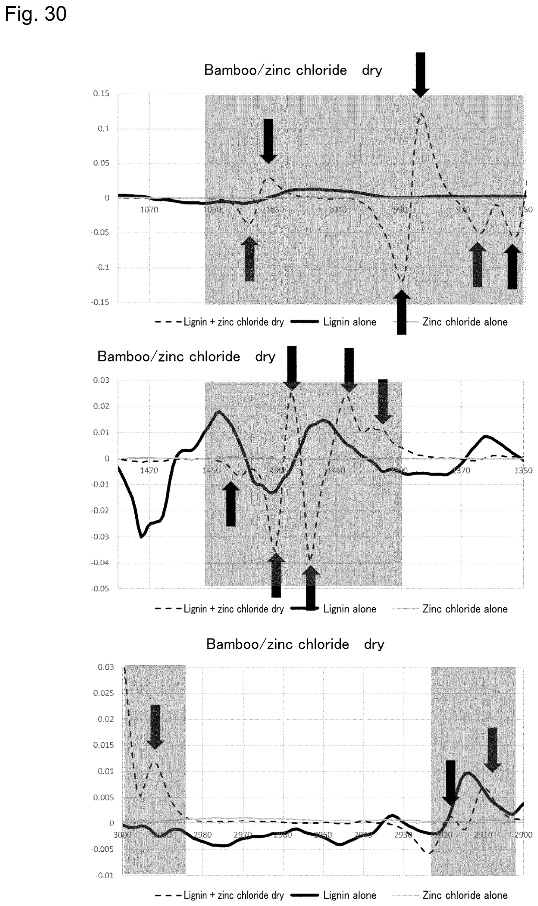

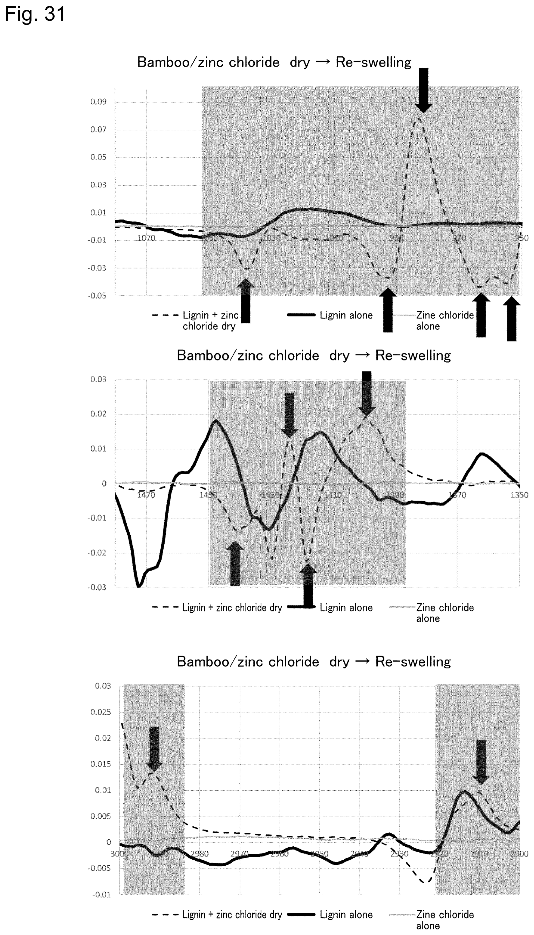

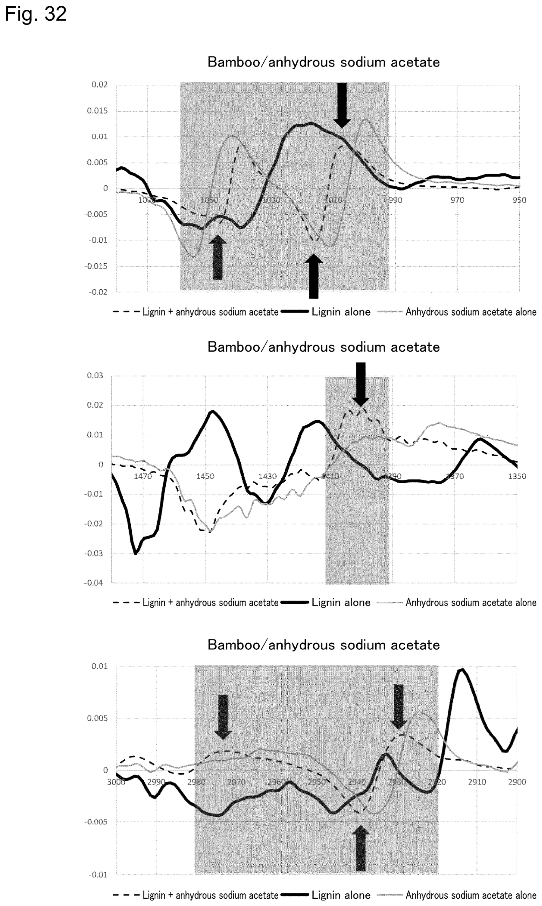

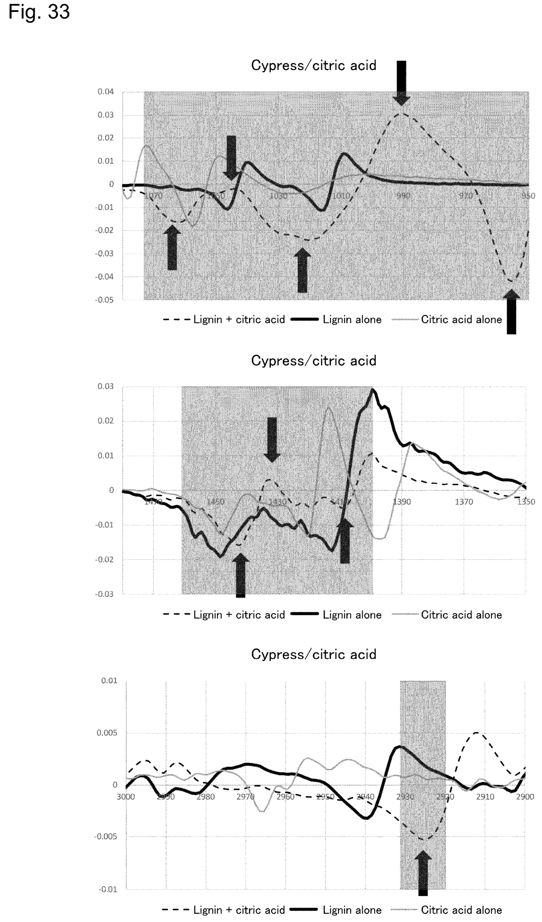

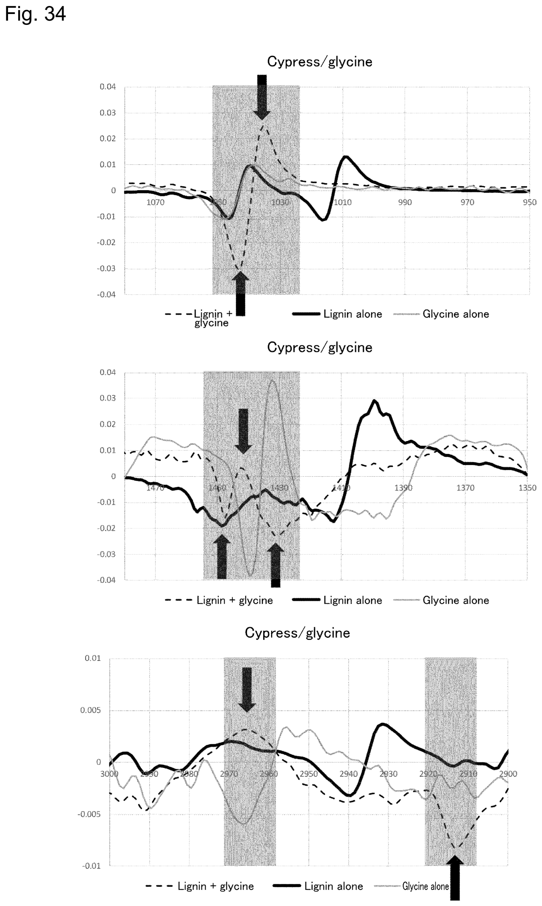

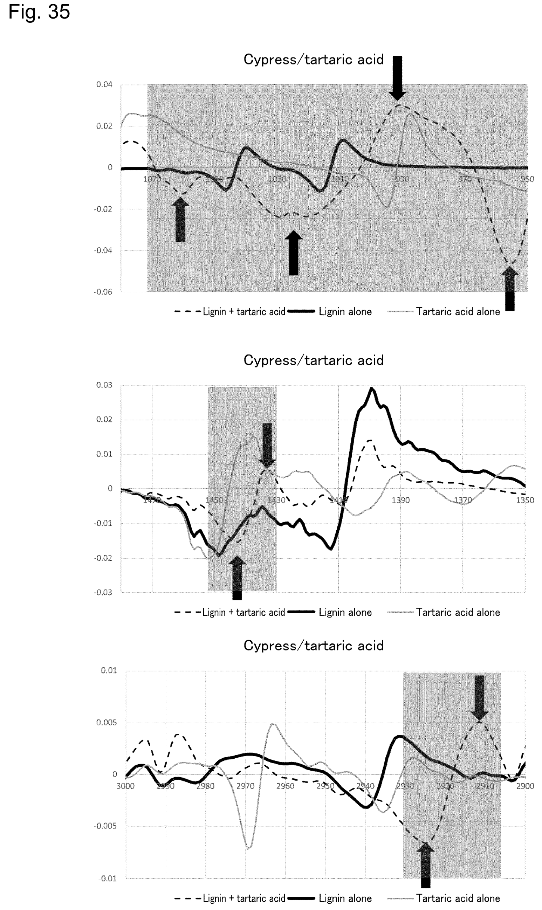

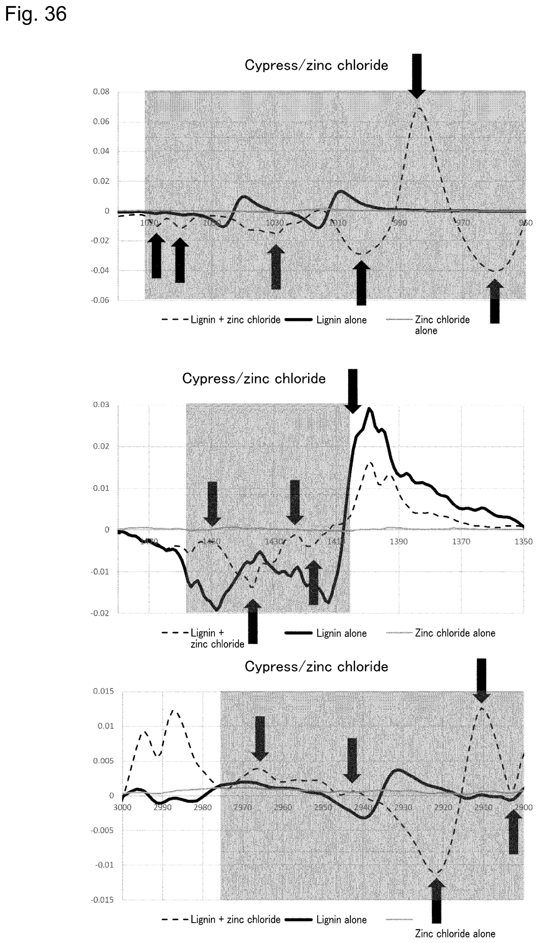

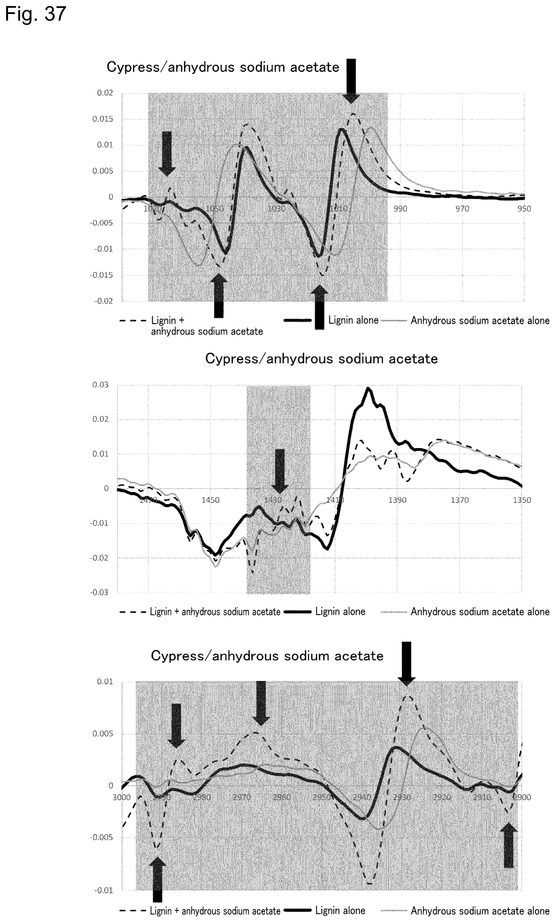

Figs. 26 to 37 show first derivative infrared absorption spectra of the complexes. In first derivative spectra of the infrared absorption spectra, at least one wavenumber range selected from the group of wavenumber ranges consisting of 1080 to 950 cm⁻¹, 1480 to 1350 cm⁻¹, and 3000 to 2900 cm⁻¹ was found to include the unique spectral structures. Regarding the bamboo-derived white lignin-zinc chloride complex, the first derivative spectra of the infrared absorption spectra were similar between the dried product and the swollen product (gel) obtained by adding water to the dried product (Figs. 29 to 31). From this, it was found that the characteristic regular higher-order structure of the complex was retained in both the dried product and the swollen product. In the swollen product, the characteristic broad and intense absorption of water was observed at 3500 to 2500 cm⁻¹, indicating that the sample is a hydrogel containing a large amount of water.

## Claims

1. A structured material of white lignin and/or a white lignin-polysaccharide complex,
the white lignin having a content of a structure containing β-O-4 ether bonds of 50% or more,
the white lignin-polysaccharide complex containing at least one bond selected from the group consisting of an α-ether bond between lignin and polysaccharide, an α-ester bond between lignin and polysaccharide, and a γ-ester bond between lignin and polysaccharide, and
the structured material being a complex of the white lignin and/or the white lignin-polysaccharide complex with an organic acid and/or a salt, and/or
the structured material being a material in which a hydroxy group of the white lignin and/or the white lignin-polysaccharide complex is modified or substituted.

2. The structured material according to claim 1, wherein
the structured material is a complex of the white lignin and/or a white lignin-polysaccharide copolymer, and/or a modified form and/or substituted form thereof, with an organic acid and/or a salt, and
the structured material has a unique spectral structure in at least one wavenumber range selected from the group consisting of 1080 to 950 cm⁻¹, 1480 to 1350 cm⁻¹, and 3000 to 2900 cm⁻¹ in a first derivative spectrum of an infrared absorption spectrum, wherein the term "unique" means that the spectral structure is not solely attributable to any of the white lignin and/or the white lignin-polysaccharide copolymer, or the organic acid and/or the salt.

3. The structured material according to claim 2, wherein the structured material has three or more unique spectral structures in wavenumber ranges consisting of 1080 to 950 cm⁻¹, 1480 to 1350 cm⁻¹, and 3000 to 2900 cm⁻¹ in the first derivative spectrum of the infrared absorption spectrum.

4. The structured material according to claim 2, which is in the form of a powder, a sol, or a gel.

5. The structured material according to claim 2, wherein the structured material is a complex of the white lignin and/or the white lignin-polysaccharide copolymer with a compound having a carboxy structure and/or a carbonyl structure and/or an amine structure, and/or a salt containing a metal ion.

6. The structured material according to claim 4, which is in the form of a gel.

7. The structured material according to claim 1, wherein the structured material is a material in which a hydroxy group of the white lignin and/or the white lignin-polysaccharide copolymer is modified and/or a material in which a hydroxy group of the white lignin and/or the white lignin-polysaccharide copolymer is substituted, and the structured material contains at least one structure selected from the group consisting of a carbonylated structure, a halogenated structure, an aminated structure, a boron-modified structure, an acylated structure, and a crosslinked structure.

8. The structured material according to claim 1, wherein the white lignin has a Hunter's whiteness (W) of 60 or more, and/or the white lignin-polysaccharide complex has a Hunter's whiteness (W) of 60 or more.

9. A method for producing the structured material of any one of claims 2 to 6 and 8, comprising:
mixing the white lignin and/or the white lignin-polysaccharide copolymer with an organic acid and/or a salt, and a solvent to obtain a solution or a dispersion; and
reducing the solvent from the solution or the dispersion.

10. A method for producing the structured material of claim 7 or 8, comprising subjecting a hydroxy group of the white lignin and/or the white lignin-polysaccharide copolymer to a modification or substitution reaction.

11. An adsorbent, recovery agent, removal agent, or transport agent for a metal ion or a salt containing the same, comprising white lignin and/or a white lignin-polysaccharide complex,
the white lignin having a content of a structure containing β-O-4 ether bonds of 50% or more, and
the white lignin-polysaccharide complex containing at least one bond selected from the group consisting of an α-ether bond between lignin and polysaccharide, an α-ester bond between lignin and polysaccharide, and a γ-ester bond between lignin and polysaccharide.

12. The adsorbent, recovery agent, removal agent, or transport agent according to claim 11, which is used to adsorb, recover, remove, or transport a metal ion or a salt containing the same by forming a complex with the metal ion or the salt containing the same.
